(19) Europäisches Patentamt

European Patent Office

Office européen des brevets

(11) **EP 1 067 522 A2**

(12) **EUROPEAN PATENT APPLICATION**

(43) Date of publication:
10.01.2001 Bulletin 2001/02

(51) Int. Cl.⁷: **G11B 7/007**

(21) Application number: 00303109.3

(22) Date of filing: 13.04.2000

(84) Designated Contracting States:
**AT BE CH CY DE DK ES FI FR GB GR IE IT LI LU MC NL PT SE**
Designated Extension States:
**AL LT LV MK RO SI**

(30) Priority: **21.06.1999 JP 17384899**
**29.02.2000 JP 2000054880**

(71) Applicant: **FUJITSU LIMITED**
**Kawasaki-shi, Kanagawa 211-8588 (JP)**

(72) Inventors:
• **Nishimoto, Hideki**
**Kawasaki-shi, Kanagawa 211-8588 (JP)**
• **Morimoto, Yasuaki**
**Kawasaki-shi, Kanagawa 211-8588 (JP)**

• **Arai, Shigeru**
**Kawasaki-shi, Kanagawa 211-8588 (JP)**
• **Numata, Takehiko**
**Kawasaki-shi, Kanagawa 211-8588 (JP)**
• **Yanagi, Shigenori**
**Kawasaki-shi, Kanagawa 211-8588 (JP)**
• **Aoki, Jun**
**Kawasaki-shi, Kanagawa 211-8588 (JP)**

(74) Representative:
**Mohun, Stephen John et al**
**Haseltine Lake & Co.,**
**Imperial House,**
**15-19 Kingsway**
**London WC2B 6UD (GB)**

(54) **Optical recording medium, method of detecting data block identification marks, and optical storage unit**

(57) An optical recording medium is provided with a substrate having a land and a groove alternately arranged in a predetermined direction, a data recording region provided on the land and the groove, and an identification mark recording region recorded with a data block identification mark. The identification mark recording region is provided on only one of the land and the groove.

FIG.9A

FIG.9B

FIG.9C

SECTOR MARK | ID PART | DATA PART

FIG.9D

EP 1 067 522 A2

# Description

The present invention generally relates to optical recording media, methods of detecting data block identification marks, and optical storage units, and more particularly to an optical recording medium which has data block identification marks arranged so as to reduce erroneous detection of the data block identification marks, a method of detecting the data block identification marks from an optical recording medium having the data block identification marks arranged only on one of land and groove of the optical recording medium, and an optical storage unit which uses such a method of detecting the data block identification marks from such an optical recording medium.

A magneto-optical disk is recorded in units of sectors which are respectively made up of a sector mark, identification (ID) information and data. In other words, data to be recorded on the magneto-optical disk are divided into predetermined sizes, and the ID information for identifying the sector of the magneto-optical disk is added in front of each predetermined sized data. Further, the sector mark for indicating a start of the ID information is added in front of each ID information. The data are recorded on a spiral or concentric tracks on the magneto-optical disk in units of such sectors.

The sector may be regarded as a kind of data block, and the sector mark may be regarded as a kind of data block identification mark.

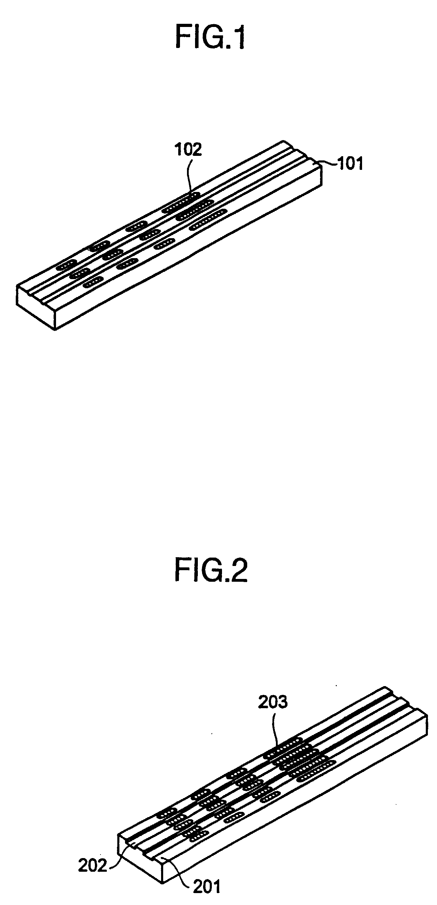

FIG. 1 is a diagram for explaining a sector mark arrangement on a known magneto-optical disk employing a land recording, such as that of a magneto-optical disk in conformance with the ISO standards. As shown in FIG. 1, sector marks 102 are formed on lands 101, in the form of embossed pits.

FIG. 2 is a diagram for explaining a sector mark arrangement on a known magneto-optical disk employing a land-groove recording. As shown in FIG. 2, sector marks 203 are formed on both lands 201 and grooves 202. A method of forming such sector marks on the magneto-optical disk is proposed in a Japanese Laid-Open Patent Application No.10-83589. for example.

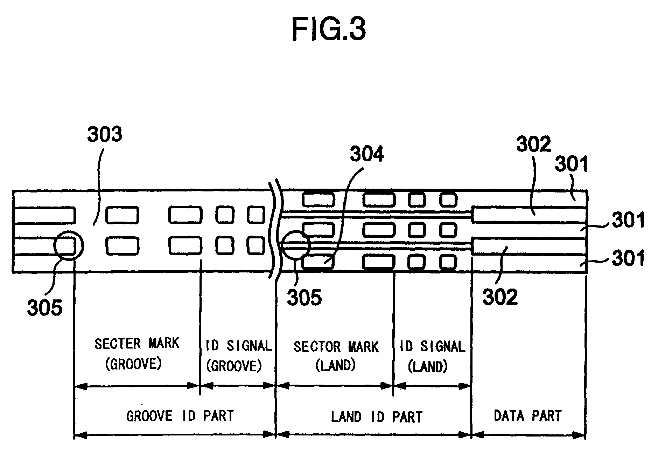

FIG. 3 is a diagram showing a sector mark arrangement on a known magneto-optical disk employing a staggered-ID land-groove recording. As shown in FIG. 3, land sector marks 304 are formed on lands 301, and groove sector marks 303 are formed on grooves 302, and a light beam 305 scans both the lands 301 and the grooves 302. A track counting method for the magneto-optical disk employing the staggered-ID land-groove recording is proposed in a Japanese Laid-Open Patent Application No.10-79125, for example.

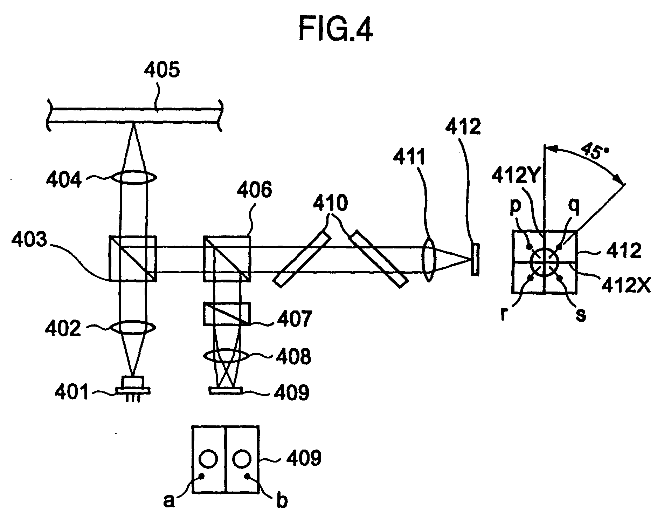

FIG. 4 is a diagram showing the construction of an optical system of a known magneto-optical disk unit. The optical system of the magneto-optical disk unit includes a semiconductor laser 401, a collimator lens 402, a polarization beam splitter 403, an objective lens 404, a magneto-optical disk 405, a second beam splitter 406, a Wollaston prism 407, a condenser lens 408, a 2-part photodetector 409, glass plates 410, a condenser lens 411, and a 4-part photodetector 412.

An enlarged view of the 2-part photodetector 409 when viewed in a beam incident direction is shown below the 2-part photodetector 409. As shown, the 2-part photodetector 409 is made up of 2 detector parts a and b. In addition, an enlarged view of the 4-part photodetector 412 when viewed in a beam incident direction is shown on the right of the 4-part photodetector 412. As shown, the 4-part photodetector 412 is made up of 4 detector parts p, q, r and s.

A laser beam emitted from the semiconductor laser 401 is formed into parallel light by the collimator lens 402, and is transmitted through the polarization beam splitter 403 to be converged on the magneto-optical disk 405 via the objective lens 404. A magnetic field is applied to the magneto-optical disk 405, and the laser beam from the semiconductor laser 401 is modulated depending on a recording signal, so as to record a magneto-optical signal on the magneto-optical disk 405.

At the time of the reproduction, the semiconductor laser 401 emits a laser beam at a power lower than that at the time of the recording, and the recorded signal is reproduced from the magneto-optical disk 405 by detecting reflected light from the magneto-optical disk 405. More particularly, the reflected light from the magneto-optical disk 405 passes through the objective lens 404, reflected by the polarization beam splitter 403, and split by the second beam splitter 406.

The light reflected by the second beam splitter 406 is split into a P-polarized component and an S-polarized component by the Wollaston prism 407, and converged on the 2-part photodetector 409 via the condenser lens 408. A difference signal (a-b) of outputs from the detector parts a and b of the 2-part photodetector 409 is detected as a reproduced magneto-optical signal. On the other hand, a sum signal (a+b) of the outputs from the detector parts a and b of the 2-part photodetector 409 is detected as an ID signal, and the sector mark is detected as this ID signal.

The light transmitted through the second beam splitter 406 is converged on the 4-part photodetector 412 via the pair of glass plates 410 and the condenser lens 411. The pair of glass plates 410 generates astigmatism depending on a position in a focal point direction of the objective lens 404, and thus, an oval beam spot is formed on the 4-part photodetector 412. The mounting angle of the pair of glass plates 410 is inclined by 45 degrees with respect to the paper surface in FIG. 4, so that a major axis and a minor axis of the oval beam spot respectively form a 45 degree angle with respect to dark lines 412X and 412Y of the 4-part photodetector 412. A difference signal (p+s)-(q+r) corresponding to a difference between a sum signal (p+s) of the diagonally arranged detector parts p and s of the 4-part photodetector 412 and a sum signal (q+r) of the diagonally arranged detector parts q and r of the 4-part photodetector 412, is detected as a focus error signal (FES). In addition, a push-pull signal (p+q)-(r+s) of a first order diffracted light returning from the magneto-optical disk 405 is detected as a tracking error signal (TES).

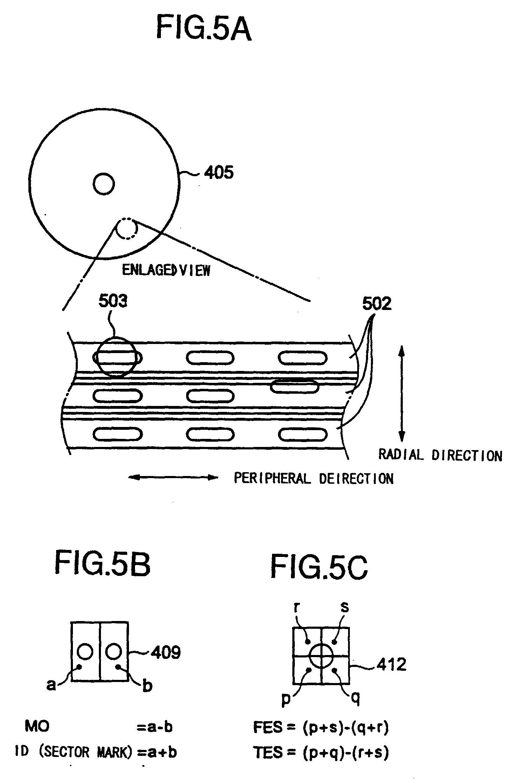

FIGS. 5A through 5C are diagrams for explaining a positional relationship of land, groove, beam and detectors. FIG. 5A shows a positional relationship of the land, the groove and the beam. Lands 502 are arranged in a radial direction of the magneto-optical disk 405, and a beam 503 scans the land 502. FIG. 5B shows a relationship of the beam and the 2-part photodetector 409. The beam 503 which is reflected by the magneto-optical disk 405 is converged as two beam spots on the detector parts a and b of the 2-part photodetector 409. FIG. 5C shows a relationship of the beam and the 4-part photodetector 412. The beam 503 which is reflected by the magneto-optical disk 405 is converted as a beam spot which overlaps the detector parts p, q, r and s of the 4-part photodetector 412.

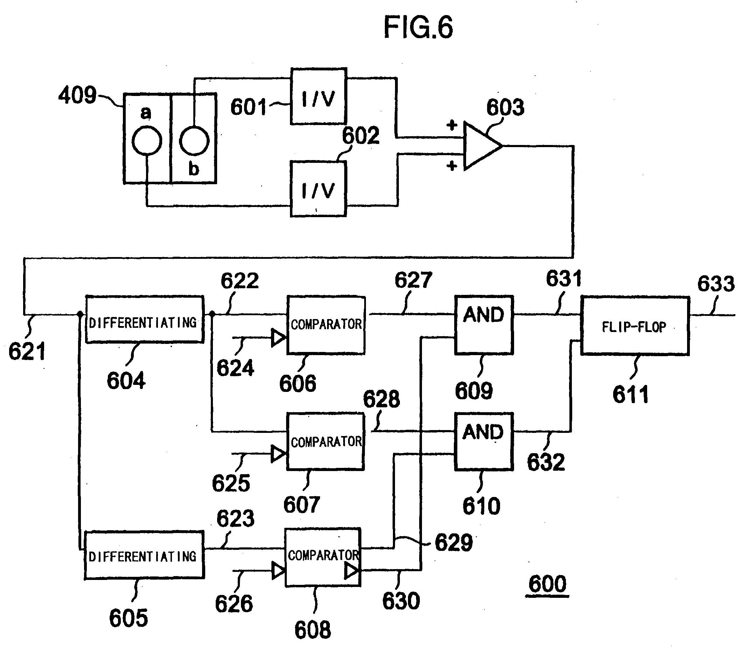

Next, a description will be given of a sector mark detection method. FIG. 6 is a system block diagram showing a known sector mark detection circuit. A sector mark detection circuit 600 shown in FIG. 6 detects the sector marks in the optical system of the known magneto-optical disk unit shown in FIG. 4, by detecting the light received by the 2-part photodetector 409.

The sector mark detection circuit 600 includes current-to-voltage (I/V) converters 601 and 602 for respectively converting output currents of the detector parts b and a of the 2-part photodetector 409 into voltages, an adder 603, a first order differentiating circuit 604, a second order differentiating circuit 605, comparators 606, 607 and 608, AND circuits 609 and 610, and a flip-flop circuit 611.

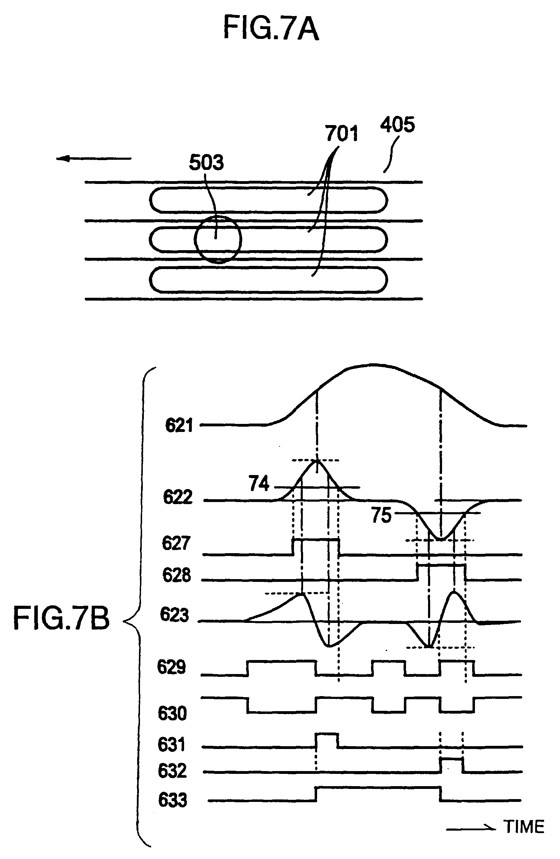

FIGS. 7A and 7B are diagrams for explaining signal waveforms at various parts of the known sector mark detection circuit 600 shown in FIG. 6. FIG. 7A shows a relationship of sector marks 701 and the beam 503 on the magneto-optical disk 405. In FIG. 7A, It is assumed for the sake of convenience that the magneto-optical disk 405 rotates in a direction of the arrow. FIG. 7B shows signal waveforms at various parts of the sector mark detection circuit 600. More particularly, FIG. 7B shows a sum signal 621 output from the adder 603, a first order differentiated signal 622 output from the first order differentiating circuit 604, a comparator output signal 627 of the comparator 606, a comparator output signal 628 of the comparator 607, a second order differentiated signal 623 output from the second order differentiating circuit 605, a non-inverted phase output signal 629 of the comparator 608, an inverted phase output signal 630 of the comparator 608, an output signal 631 of the AND circuit 609, an output signal 632 of the AND circuit 610, and a sector mark signal 633 output from the flip-flop circuit 611. In addition, reference numerals 74 and 75 in FIG. 7B denote threshold values.

When the beam (or beam spot) 503 passes over the sector mark 701, the return light from the magneto-optical disk 405 reaches the 2-part photodetector 409 which outputs currents depending on the intensity of the received return light. The output currents of the 2-part photodetector 409 are converted into the voltages by the I/V converters 601 and 602, and then added by the adder 603 which outputs the sum signal 621 of the signals output from the detector parts a and b of the 2-part photodetector 409.

The sum signal is subjected to a first order differentiation in the first order differentiating circuit 604, and is subjected to a second order differentiation in the second order differentiating circuit 605. The first order differentiated signal 622 is compared with a positive voltage level 624 in the comparator 606 which outputs the comparator output signal 627. On the other hand, the first order differentiated signal 622 is compared with a negative voltage level 625 in the comparator 607 which outputs the comparator output signal 628. The second order differentiated signal 623 is compared with a zero voltage level 626 in the comparator 608 which outputs the non-inverted phase output signal 629 and the inverted phase output signal 630. The comparator output signal 627 and the inverted phase output signal 630 are input to the AND circuit 609 which produces the output signal 631. In addition, the comparator output signal 628 and the non-inverted phase output signal 629 are input to the AND circuit 610 which produces the output signal 631. The flip-flop circuit 611 is set by the output signal 631 of the AND circuit 609, and is reset by the output signal 632 of the AND circuit 610. Hence, the sector mark signal 633 is detected and output from the flip-flop circuit 611.

If the sector mark arrangement of the magneto-optical disk employing the land recording as in FIG. 1 is applied to the magneto-optical disk employing the land-groove recording, the sector mark arrangement of the magneto-optical disk employing the land-groove recording becomes as shown in FIG. 2. In the case of the land-groove recording, the recording density increases in the radial direction of the magneto-optical disk because information is recorded on both the land and the groove. However, it is difficult to record the sector marks in the form of phase pits on both the land and the groove.

In addition to the above difficulty in producing the magneto-optical disk, signals mix into signals of adjacent tracks, to thereby generate crosstalk between the land and the groove. In order to suppress generation of crosstalk, the method proposed in the Japanese Laid-Open Patent Application No.10-79125 employs the staggered ID system in which pits of the ID signal on the land and the groove are staggered in the tangential (circumferential) direction of the magneto-optical disk. According to this staggered ID system, the sector marks are also staggered for the land and the groove, as shown in FIG. 3. Hence, the groove sector mark 303 and the land sector mark 304 are staggered in the tangential direction of the magneto-optical disk. As a result, there is a possibility of erroneously detecting a sector mark due to crosstalk.

Accordingly, embodiments of the present invention aim to provide a novel and useful optical recording medium, method of detecting data block identification marks, and optical storage unit, in which the problems described above are eliminated.

Another and more specific aim of these embodiments is to provide an optical recording medium which is capable of preventing erroneous detection of a data block identification mark such as a sector mark due to crosstalk.

Still another aim of the embodiments is to provide a method of detecting data block identification mark and an optical storage unit, which are capable of detecting the data block identification mark from an optical recording medium on which the data block identification mark such as a sector mark is only arranged in a land or a groove.

A further aim of the embodiments is to provide an optical recording medium and an optical storage unit, which are capable of detecting an ID signal having a sufficiently large amplitude, without sacrificing a signal-to-noise (S/N) ratio of a reproduced data signal, even if embossed pits are made shallow depending on a groove depth of a track which suits the data reproduction.

Another aim of the present embodiments is to provide an optical recording medium comprising a substrate having a land and a groove alternately arranged in a predetermined direction, a data recording region provided on the land and the groove, and an identification mark recording region provided on only one of the land and the groove and recorded with a data block identification mark. According to an optical recording medium of the present invention, it is possible to prevent erroneous detection of the data block identification mark, because the data block identification mark is recorded on only one of the land and the groove.

Still another aim of embodiments presented herein is to provide a method of detecting a data block identification mark from an optical recording medium which is provided with a substrate having a land and a groove alternately arranged in a predetermined direction, a data recording region provided on the land and the groove, and an identification mark recording region provided on only one of the land and the groove and recorded with a data block identification mark, comprising the step of detecting the data block identification mark from a land or a groove having no identification mark recording region, based on a crosstalk signal from a data block identification mark of an adjacent groove or land. According to a method of the present invention, it is possible to prevent erroneous detection of the data block identification mark, because the data block identification mark is recorded on only one of the land and the groove.

A further aim of these embodiments is to provide an optical storage unit for writing and/or reading information from an optical recording medium which is provided with a substrate having a land and a groove alternately arranged in a predetermined direction, a data recording region provided on the land and the groove, and an identification mark recording region provided on only one of the land and the groove and recorded with a data block identification mark, comprising an identification mark detecting section detecting the data block identification mark from a land or a groove having no identification mark recording region, based on a crosstalk signal from a data block identification mark of an adjacent groove or land, a first detector detecting data recorded on the data recording region, and a second detector detecting the data block identification mark. According to an optical storage unit of the present invention, it is possible to prevent erroneous detection of the data block identification mark, because the data block identification mark is recorded on only one of the land and the groove. In addition, it is possible to separate the detecting systems which detect the data and the data block identification mark.

Another aim of preferred embodiments is to provide an optical storage unit usable with an optical recording medium which has a track groove and pits with the same depth, and the track groove has a predetermined depth suited for data reproduction, comprising a photodetector detecting a returning light which is reflected from the optical recording medium and is split into at least two in a direction of the track on the optical recording medium, and an ID signal detector obtaining a difference signal of output signals of the photodetector which detects the light which is split into at least two in the direction of the track on the optical recording medium, and outputting the difference signal as the ID signal. According to an optical storage unit of the present invention, it is possible to obtain an ID signal having a sufficiently large amplitude without sacrificing the signal-to-noise (S/N) ratio of the reproduced data signal, even in a case where the depth of embossed pits is small.

Still another aim of embodiments herein is to provide an optical storage unit for optically reading from an optical recording medium an ID signal which indicates a position on the optical recording medium by embossed pits, comprising a photodetector, having detector parts divided into at least two in a direction corresponding to a track on the optical recording medium, detecting returning light beam which is reflected from the optical recording medium, and an ID signal detector detecting a difference signal in the direction of the track based on output signals of the detector parts of the photodetector, and outputting the difference signal as a detected ID signal. According to an optical storage unit of the present invention, it is possible to obtain an ID signal having a sufficiently large amplitude without sacrificing the signal-to-noise (S/N) ratio of the reproduced data signal, even in a case where the depth of embossed pits is small.

Other objects and further features of the present invention will be apparent from the following detailed description when read in conjunction with the accompanying drawings.

The present invention is defined in the attached independent claims, to which reference should now be made. Further, preferred features may be found in the sub claims appended thereto.

Embodiments of the invention will now be described, by way of example only, with reference to the accompanying drawings, in which:

FIG. 1 is a diagram for explaining a sector mark arrangement on a known magneto-optical disk employing a land recording;

FIG. 2 is a diagram for explaining a sector mark arrangement on a known magneto-optical disk employing a land-groove recording;

FIG. 3 is a diagram showing a sector mark arrangement of a known magneto-optical disk employing a staggered-ID land-groove recording;

FIG. 4 is a diagram showing the construction of an optical system of a known magneto-optical disk unit;

FIGS. 5A through 5C are diagrams for explaining a positional relationship of land, groove, beam and detectors;

FIG. 6 is a system block diagram showing a known sector mark detection circuit;

FIGS. 7A and 7B are diagrams for explaining signal waveforms at various parts of the known sector mark detection circuit;

FIG. 8 is a diagram showing a sector mark arrangement of a first embodiment of an optical recording medium applied to a magneto-optical disk;

FIGS. 9A through 9D are diagrams showing a magneto-optical disk having the sector marks of the first embodiment of the optical recording medium arranged in grooves;

FIGS. 10A and 10B respectively are a perspective view and a plan view showing a second embodiment of the optical recording medium according to the present invention;

FIGS. 11A through 11C are diagrams showing a third embodiment of the optical recording medium according to the present invention;

FIG. 12 is a diagram showing the relationship of height or depth of the sector marks and modulation factor of reproduced sector mark signals;

FIG. 13 is a diagram showing the construction of an optical system of a second embodiment of an optical storage unit according to the present invention;

FIG. 14 is a diagram for explaining a positional relationship of sector marks, beam and photodetectors;

FIG. 15 is a system block diagram showing a sector mark detection circuit of the second embodiment of the optical storage unit;

FIGS. 16A and 16B are diagrams for explaining detected waveforms of the sector marks;

FIGS. 17A and 17B are diagrams for explaining a positional error of the sector marks;

FIG. 18 is a system block diagram showing a sector mark detection circuit of a third embodiment of the optical storage unit according to the present invention;

FIG. 19 is a system block diagram showing a sector mark detection circuit of a fourth embodiment of the optical storage unit according to the present invention;

FIG. 20 is a system block diagram showing a sector mark detection circuit of a fifth embodiment of the optical storage unit according to the present invention;

FIG. 21 is a diagram showing the sector marks for a case where a sector mark width is equal to a groove width;

FIG. 22 is a diagram showing the sector marks for a case where the sector mark width is greater than the groove width;

FIGS. 23A and 23B are diagrams for explaining detected waveforms of the sector marks;

FIG. 24 is a diagram showing the internal construction of a sixth embodiment of the optical storage unit according to the present invention;

FIG. 25 is a diagram showing an important part of an optical system of the sixth embodiment of the optical storage unit;

FIG. 26 is a perspective view showing a part of an optical system following a first polarization beam splitter;

FIGS. 27A through 27C are diagrams for explaining beam spots on photodetectors;

FIG. 28 is a diagram showing a relationship of an ID signal obtained from a sum total signal and a depth of embossed pits;

FIG. 29 is a perspective view showing an important part of an optical system of a seventh embodiment of the optical storage unit according to the present invention;

FIGS. 30A through 30C are diagrams for explaining beam spots on photodetectors;

FIGS. 31A through 31C are diagrams for explaining a relationship of ID signals on the magneto-optical disk and waveforms of detected ID signals;

FIG. 32 is a diagram showing a relationship of the ID signal obtained from a sum total signal, an ID signal obtained from a TPP signal, and the depth of the embossed pits;

FIG. 33 is a system block diagram showing an embodiment of a detection system of the seventh embodiment of the optical storage unit;

FIG. 34 is a perspective view showing an important part of an eighth embodiment of the optical storage unit according to the present invention;

FIGS. 35A through 35C are diagrams for explaining beam spots on photodetectors;

FIG. 36 is a perspective view showing an important part of an optical system of a ninth embodiment of the optical storage unit according to the present invention;

FIGS. 37A and 37B are diagrams for explaining beam spots on photodetectors;

FIG. 38 is a perspective view showing an important part of an optical system of a tenth embodiment of the optical storage unit according to the present invention;

FIG. 39 is a diagram for explaining beam spots on a photodetector;

FIG. 40 is a perspective view showing an important part of an optical system of an eleventh embodiment of the optical storage unit according to the present invention;

FIG. 41 is a diagram for explaining beam spots on a photodetector;

FIG. 42 is a system block diagram showing an embodiment of a detection system of the eleventh embodiment of the optical storage unit;

FIG. 43 is a perspective view showing an important part of an optical system of a twelfth embodiment of the optical storage unit according to the present invention;

FIG. 44 is a diagram for explaining beam spots on a photodetector;

FIG. 45 is a diagram for explaining a relationship of an ID signal amplitude and the depth of the embossed pits; and

FIG. 46 is a diagram for explaining switching of ID signals.

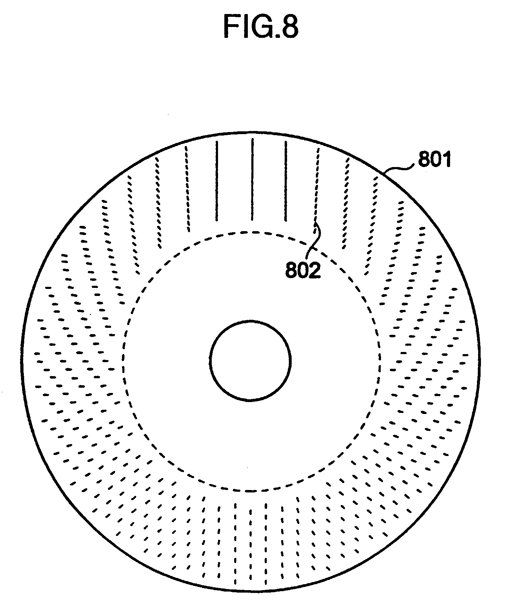

A description will be given of various embodiments of an optical recording medium according to the present invention, a method of detecting data block identification mark according to the present invention, and an optical storage unit according to the present invention, by referring to FIG. 8 and the subsequent drawings.

First, a description will be given of a first embodiment of the optical recording medium according to the present invention. In this first embodiment of the optical recording medium, the present invention is applied to a magneto-optical disk.

FIG. 8 is a diagram showing a sector mark arrangement of the first embodiment of the optical recording medium applied to the magneto-optical disk. Sector marks 802 which indicate beginnings of corresponding sectors are recorded on a magneto-optical disk 801 in a manner shown in FIG. 8, as data block identification marks. This magneto-optical disk 801 is recorded by the zone constant angular velocity (ZCAV) system. In this case, the number of sectors per revolution of the magneto-optical disk 801 decreases from the outer peripheral zone towards the inner peripheral zone.

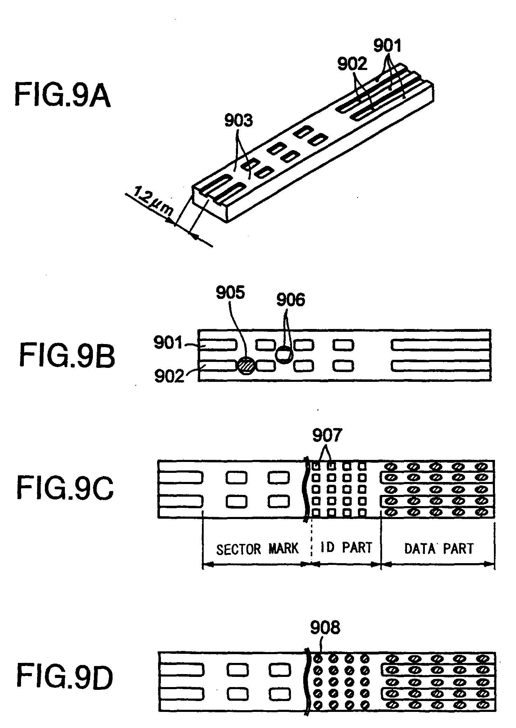

FIGS. 9A through 9D are diagrams showing the magneto-optical disk having the sector marks of the first embodiment of the optical recording medium arranged in grooves. FIG. 9A shows a perspective view, FIG. 9B shows a plan view, FIG. 9C shows a plan view of an ID part formed by embossed pits, and FIG. 9D shows a plan view of an ID part recorded by magneto-optical recording.

In this embodiment, a groove pitch on the magneto-optical disk is 1.2 μm, that is, a track pitch is 0.6 μm. A substrate forming the base of the magneto-optical disk is made of a material such as glass and polycarbonate. Lands 901 and grooves 902 are alternately arranged in the radial direction of the magneto-optical disk. A sector mark 903 is formed on a grooveless part of the groove 902. This grooveless part of the groove 902 is essentially a projecting part having approximately the same height as the land 901. The sector mark 903 is used in common between tracks of the land 901 and the groove 902. As shown in FIG. 9B, the quantity of the returning light to the photodetector changes at a part 905 indicated by the hatching for the groove 902, and at a part 906 indicated by the hatching for the land 901, thereby making it possible to detect the sector mark 903 from such changes.

In an ID part other than the sector mark 903, an ID signal 907 may be recorded in the form of embossed pits as shown in FIG. 9C. In addition, it is possible to record an ID signal 908 by magneto-optical recording or phase change recording, as shown in FIG. 9D.

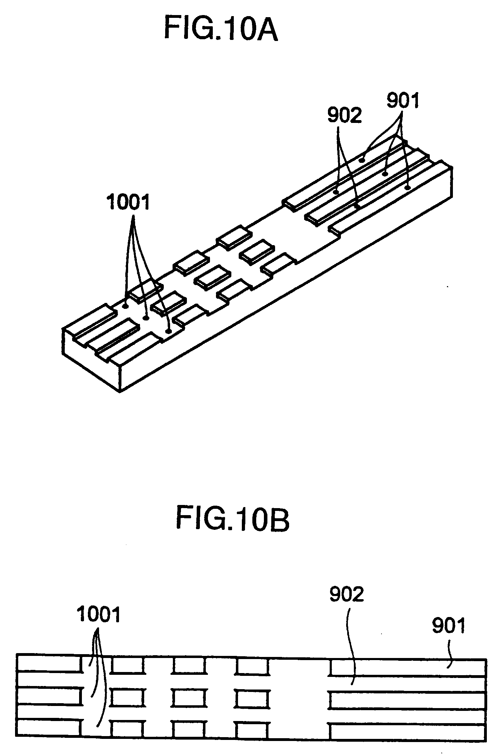

Next, a description will be given of a second embodiment of the optical recording medium according to the present invention. FIGS. 10A and 10B respectively are a perspective view and a plan view showing the second embodiment of the optical recording medium. In this embodiment of the optical recording medium, the groove 902 has no grooveless part, but the land 901 has a cavity part with approximately the same depth as the groove 902. A sector mark 1001 is recorded in the cavity part of the land 901. Similarly as in the case of the first embodiment of the optical recording medium, this sector mark 1001 is used in common between the tracks of the land 901 and the groove 902.

Next, a description will be given of a third embodiment of the optical recording medium according to the present invention. FIGS. 11A through 11C are diagrams showing the third embodiment of the optical recording medium. This third embodiment of the optical recording medium employs the staggered ID system which records the ID signal in a staggered arrangement along the tangential direction of the magneto-optical disk.

FIG. 11A shows a part of the magneto-optical disk within a zone other than a zone boundary. In this zone, the lands 901 and the grooves 902 are alternately arranged in the radial direction of the magneto-optical disk. In addition, a sector mark 1102 is recorded on a grooveless part, that is, a projecting part, of the groove 902, having approximately the same height as the land 901. This sector mark 1102 is used in common between the tracks of the land 901 and the groove 902. Further, a groove ID signal 1103 is arranged immediately after the sector mark 1102 along the tangential direction of the magneto-optical disk, and a land ID signal 1104 is arranged immediately after the groove ID signal 1103 along the tangential (circumferential) direction of the magneto-optical disk.

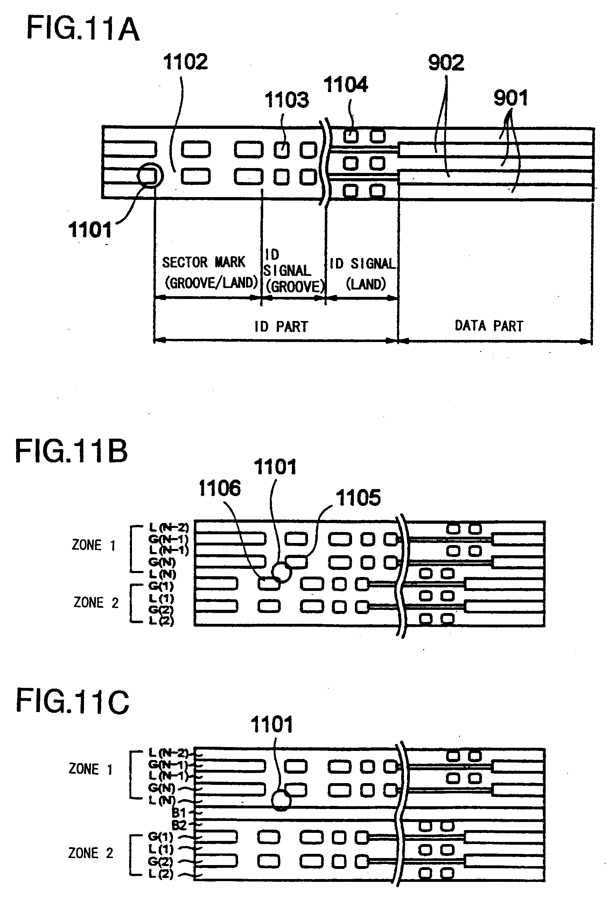

FIG. 11B shows a zone boundary part. In a zone boundary part between zones 1 and 2 shown in FIG. 11B, a sector mark 1105 and a sector mark 1106 are arranged at staggered positions along the tangential direction of the magneto-optical disk. Since the sector mark is detected from crosstalk in this case, when the sector mark 1105 is detected at a last land track L(N) of the zone 1, the sector mark 1106 of a first groove track G(1) of the zone 2 is erroneously detected.

In order to avoid this erroneous sector mark detection, this embodiment of the optical recording medium employs the sector mark arrangement shown in FIG. 11C having buffer tracks B1 and B2 at the zone boundary part. The buffer tracks B1 and B2 do not have embossed pits for recording the sector marks or the ID information. The buffer tracks B1 and B2 do not have embossed pits, because the pits of the adjacent zones would mutually interfere, and it is desirable to avoid such mutual interference of the pits between the zones. In this case, tracks which are used to actually record data, may satisfy either one of the following cases [1] and [2].

> Case [1]: Use a groove track G(N) as a last groove track in the zone 1, and use a land track L(N-1) as a last land track in the zone 1.
> Case [2]: Use a groove track G(N-1) as a last groove track in the zone 1, and use a land track L(N-1) as a last land track in the zone 1.

The case [1] enables effective use of the tracks. In the case [1], both the zones 1 and 2 will start from a groove track and end by a groove track, and the number of land tracks and the number of groove tracks within the same zone are different. On the other hand, the case [2] enables the number of land tracks and the number of groove tracks within the same zone to match. Accordingly, it is possible to record the data according to either one of the cases [1] and [2] to suit the requirements of the magneto-optical disk.

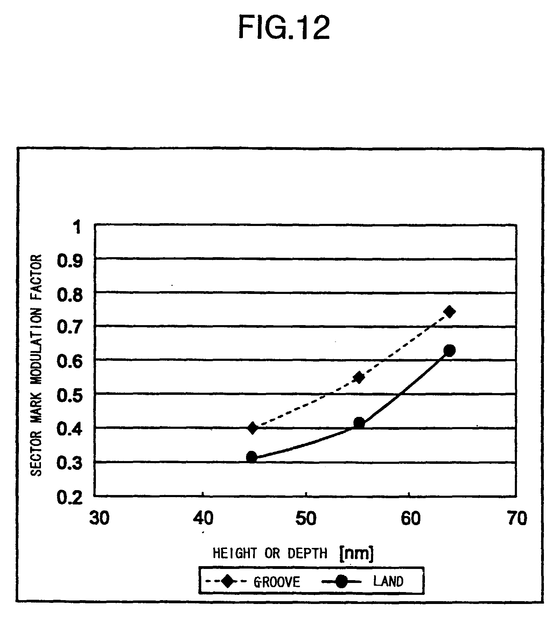

Next, a description will be given of a fourth embodiment of the optical recording medium according to the present invention. FIG. 12 is a diagram showing the relationship of height or depth of the sector marks and modulation factor of reproduced sector mark signals.

As shown in FIG. 12, as the height of the grooveless part (projecting part) of the groove and the depth of the cavity part of the land become larger, the modulation factor of the reproduced sector mark signals becomes larger. On the other hand, in the region in which the magneto-optic signal is recorded, the carrier-to-noise ratio (CNR) deteriorates as the groove depth becomes larger. Particularly in the case of a magnetic super resolution (MSR) which requires a reproducing magnetic field, it is necessary to increase the reproducing magnetic field of the groove. For example, in a magneto-optical disk employing the land-groove recording with a track pitch of 0.6 $\mu$m and a shortest mark of 2T signal of approximately 0.30 $\mu$m, it is desirable that the groove depth (pitch depth) of the sector mark and the ID part is approximately 55 nm, and the groove depth of the data recording part is approximately 45 nm.

A description will now be given of the various embodiments of the optical storage unit according to the present invention.

First, a description will be given of a first embodiment of the optical storage unit according to the present invention. In this first embodiment of the optical storage unit, the present invention is applied to an optical disk unit which uses the known optical system shown in FIG. 4, and detects the sector mark using the sum signal (a+b) from the 2-part photodetector 409 of the known sector mark detection circuit shown in FIG. 6.

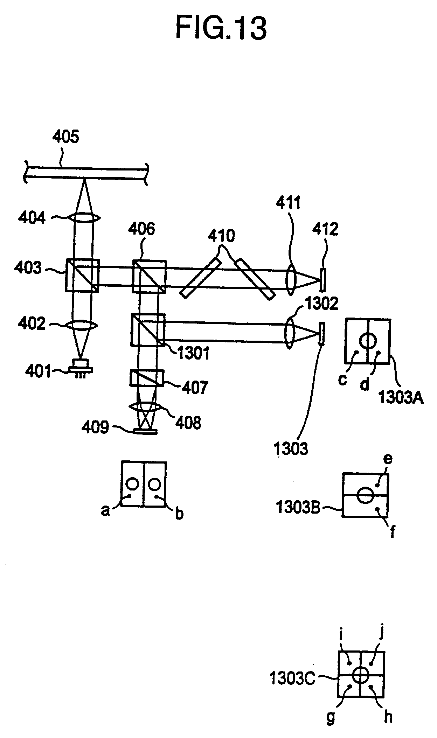

Next, a description will be given of a second embodiment of the optical storage unit according to the present invention. FIG. 13 is a diagram showing the construction of an optical system of the second embodiment of the optical storage unit. In this second embodiment of the optical storage unit, the present invention is applied to an optical disk unit. In FIG. 13, those parts which are the same as those corresponding parts in FIG. 4 are designated by the same reference numerals, and a description thereof will be omitted.

The optical system shown in FIG. 13 is provided with a new optical system in addition to the structure shown in FIG. 4, by additionally providing a beam splitter 1301, a condenser lens 1302, and a photodetector 1303. The beam splitter 1301 is provided in a returning optical path of the returning light component which corresponds to the magneto-optical signal and is separated by the second beam splitter 406. The returning light component reflected by the beam splitter 1301 is converged on the photodetector 1303 via the condenser lens 1302.

It is not essential that the photodetector 1303 is made up of divided detector parts, but it is desirable that the photodetector 1303 is made up of two or more detector parts. Hence, in this embodiment, one of a 2-part photodetector 1303A, a 2-part photodetector 1303B and a 4-part photodetector 1303C shown in FIG. 13 is used as the photodetector 1303. The 2-part photodetector 1303A is divided in the tangential direction of the optical disk, and is made up of detector parts c and d. The 2-part photodetector 1303B is divided in the radial direction of the optical disk, and is made up of detector parts e and f. The 4-part photodetector 1303C is divided in both the tangential direction and the radial direction of the optical disk, and is made up of detector parts g, h, i and j.

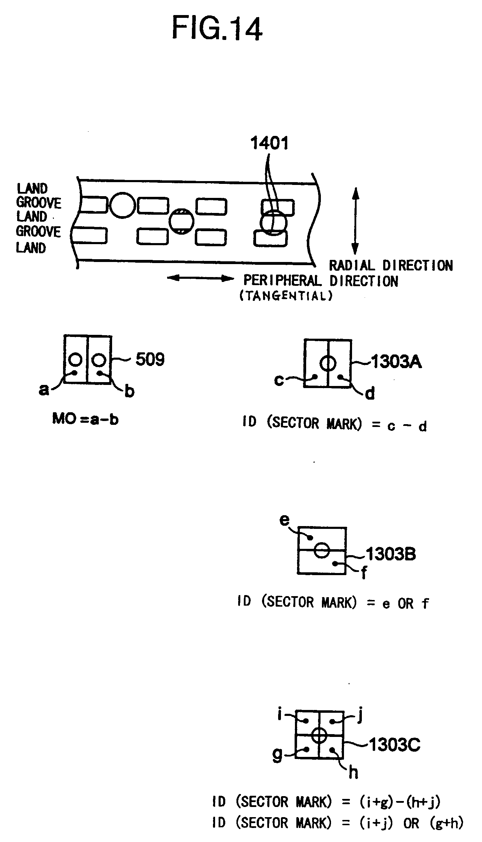

FIG. 14 is a diagram for explaining a positional relationship of the sector marks, the beam and the photodetectors. In FIG. 14, those photodetectors which are the same as those corresponding photodetectors in FIG. 13 are designated by the same reference numerals, and a description thereof will be omitted.

A description will now be given of a case where the optical disk unit uses the 2-part photodetector 1303A as the photodetector 1303 in FIG. 13.

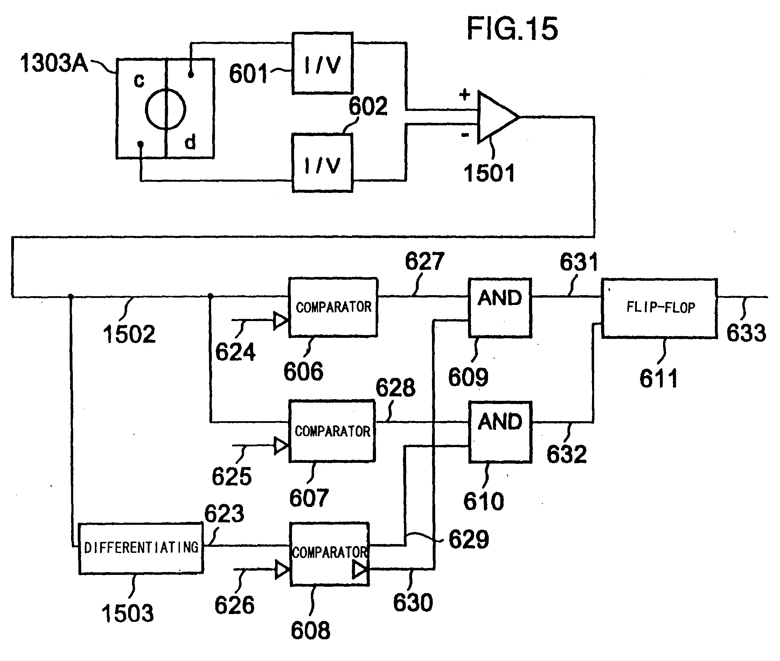

FIG. 15 is a system block diagram showing a sector mark detection circuit of the second embodiment of the optical storage unit, for the case where the 2-part photodetector 1303A is used. In FIG. 15, those parts which are the same as those corresponding parts in FIG. 6 are designated by the same reference numerals, and a description thereof will be omitted.

The sector mark detection circuit shown in FIG. 15 differs from that shown in FIG. 6 in that the I/V converters 601 and 602 convert output currents from the detector parts c and d of the 2-part photodetector 1303A, and a subtracter 1501 generates a difference signal (c-d) 1502 from output voltages of the I/V converters 601 and 602. In other words, the subtracter 1501 is provided in place of the adder 603, a first order differentiating circuit 1503 is provided in place of the second order differentiating circuit 605, and the first order differentiating circuit 604 is omitted. Hence, the difference signal (c-d) 1502 from the subtracter 1501 is input to the comparators 606 and 607. In addition, this difference signal (c-d) 1502 is also input to the first order differentiating circuit 1503, and a first order differentiated signal 623 from the first order differentiating circuit 1503 is input to the comparator 608.

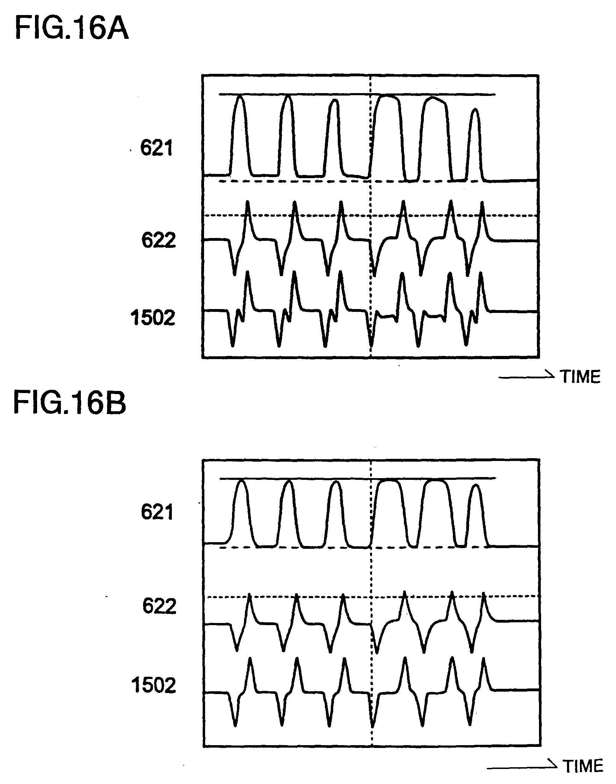

FIGS. 16A and 16B are diagrams for explaining detected waveforms of the sector marks, by comparing the sum signal 621 and the first order differentiated signal 622 of the sector mark detection circuit shown in FIG. 6 and the difference signal (c-d) 1502 of the sector mark detection circuit shown in FIG. 15. FIG. 16A shows the waveforms of the sum signal 621, the first order differentiated signal 622 and the difference signal 1502 for the groove, and FIG. 16B shows the waveforms of the sum signal 621, the first order differentiated signal 622 and the difference signal 1502 for the land.

As may be seen from FIGS. 16A and 16B, the waveform of the first order differentiated signal 622 of the sector mark detection circuit shown in FIG. 6 is equivalent to the waveform of the difference signal 1502 of the sector mark detection circuit shown in FIG. 15. Accordingly, the circuit part shown in FIG. 15 from the comparators 606, 607, 608 up to the flip-flop circuit 611 operates similarly to the corresponding circuit part shown in FIG. 6, so as to detect the sector mark. Thus, in this embodiment of the optical storage unit, it is possible to reduce the number of differentiating circuits by one as compared to the sector mark detection circuit shown in FIG. 6.

Next, a description will be given of a third embodiment of the optical storage unit according to the present invention. This embodiment of the optical storage unit is applied to the optical disk unit shown in FIG. 13 which uses the 2-part photodetector 1303B as the photodetector 1303.

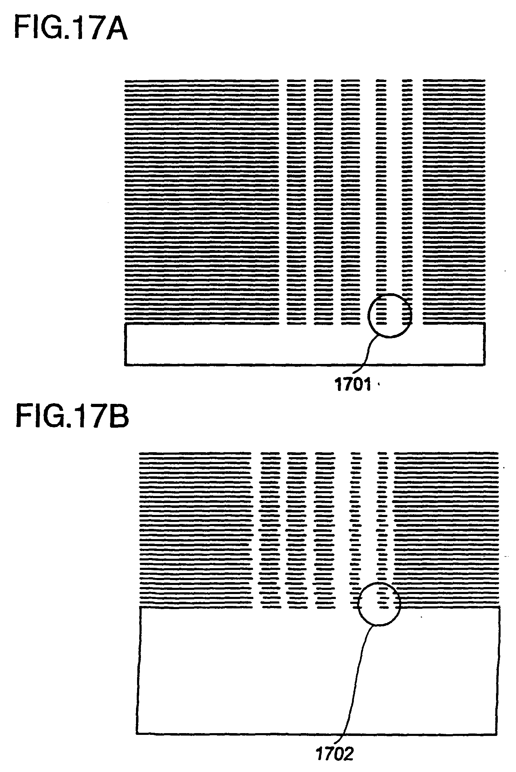

This embodiment of the optical storage unit is particularly suited for application to the optical disk unit which uses an optical disk on which the recorded sector marks include positional errors introduced during the process of producing the optical disk. First, a description will be given of the positional error of the sector marks. FIGS. 17A and 17B are diagrams for explaining the positional error of the sector marks, and show a case where the positional error of the sector marks is caused by fluctuations in the rotational speed of a spindle of a cutting machine which cuts the grooves of the optical disk. FIG. 17A shows the sector mark arrangement at the starting part of one revolution of the optical disk, and FIG. 17B shows the sector mark arrangement at the ending part of one revolution of the optical disk.

Even if sector marks 1701 at the starting part of one revolution of the optical disk are aligned as shown in FIG. 17A, sector marks 1702 at the ending part of one revolution of the optical disk become deviated and non-aligned as shown in FIG. 17B. FIG. 14 described above shows the relationship of the sector marks and the beam when the adjacent sector marks are deviated and non-aligned, as in the ending part shown in FIG. 17B. A sector mark deviation 1401 shown in FIG. 14 indicates such non-alignment of the adjacent sector marks. As shown in FIG. 14, when scanning the land, the sector mark is read by reading crosstalk signals from the grooves on both sides of this land. For this reason, a jitter is introduced in the land sector mark signal if the positions of the sector marks in the grooves on both sides of the land are deviated in the tangential direction of the optical disk. Accordingly, this embodiment of the optical storage unit uses the 2-part photodetector 1303B which is divided in the radial direction of the optical disk into the two detector parts e and f. The output of one of the detector parts e and f of the 2-part photodetector 1303B is used to detect the sector mark. explaining a positional error of the sector marks;

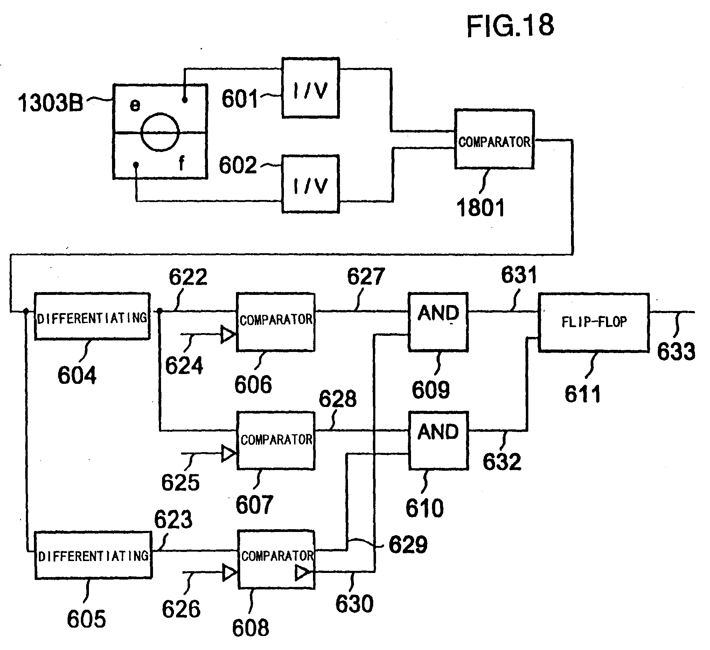

FIG. 18 is a system block diagram showing a sector mark detection circuit of the third embodiment of the optical storage unit. In FIG. 18, those parts which are the same as those corresponding parts in FIG. 6 are designated by the same reference numerals, and a description thereof will be omitted.

In FIG. 18, a comparator 1801 is used in place of the adder 603 shown in FIG. 6. This comparator 1801 compares the output voltages of the I/V converters 601 and 602, and selectively outputs one of the compared voltages having the larger amplitude. As a result, the output of one of the detector parts e and f of the 2-part photodetector 1303B, having the larger amplitude, is used for the sector mark detection, so as to avoid undesirable effects of the jitter caused by the positional deviation of the sector marks in the grooves on both sides of the land which is being scanned for the sector mark. The selectively output signal of the comparator 1801 is equivalent to the sum signal described above. Thus, the circuit part from the first order differentiating circuit 604, the second order differentiating circuit 605 up to the flip-flop circuit 611 operates similarly to the corresponding circuit part shown in FIG. 6, so as to detect the sector mark.

If the output of the detector part e is to be selected and used when detecting the sector mark of the land, the objective lens 404 may be shifted in the radial direction of the optical disk to select the detector part e. Similarly, if the output of the detector part f is to be selected and used when detecting the sector mark of the land, the objective lens 404 may be shifted in the radial direction of the optical disk to select the detector part f.

Further, since the quantity of light (hereinafter referred to as the light quantity) decreases when the output of only one of the detector parts e and f of the 2-part photodetector 1303B is used, as compared to the case where the sum signal of the outputs of the 2-part photodetector is used, it is possible in this case to increase the light quantity of the laser beam emitted from the semiconductor laser 401.

In addition, when the optical disk is inserted into the optical disk unit, it is possible to test-read the optical disk and optimize the system by increasing the light quantity of the laser beam emitted from the semiconductor laser 401 and/or shifting the objective lens 404.

Next, a description will be given of a fourth embodiment of the optical storage unit according to the present invention. In this embodiment of the optical storage unit, the 4-part photodetector 1303C is used as the photodetector 1303 shown in FIG. 13.

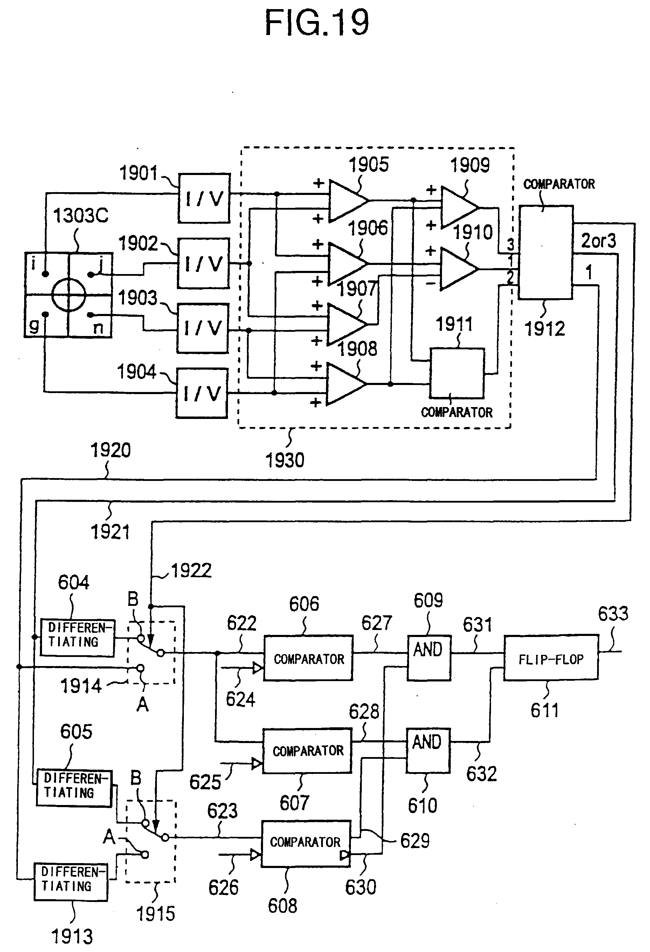

FIG. 19 is a system block diagram showing a sector mark detection circuit of the fourth embodiment of the optical storage unit. In FIG. 19, those parts which are the same as those corresponding parts in FIG. 6 are designated by the same reference numerals, and a description thereof will be omitted.

The sector mark detection circuit shown in FIG. 19 is provided with four current-to-voltage (I/V) converters 1904, 1903, 1901 and 1902 for respectively converting the output currents of the four detector parts g, h, i and j of the 4-part photodetector 1303C into corresponding voltages, a matrix circuit 1930, a comparator 1912, first order differentiating circuits 604 and 1913, and switches 1914 and 1915.

The matrix circuit 1930 includes adders 1905 through 1909, a subtracter 1910, and a comparator 1911 which are connected as shown. The adder 1905 adds the output voltages of the I/V converters 1901 and 1902 corresponding to the outputs of the detector parts i and j, and the adder 1906 adds the output voltages of the I/V converters 1901 and 1904 corresponding to the outputs of the detector parts i and g. The adder 1907 adds the output voltages of the I/V converters 1902 and 1903 corresponding to the outputs of the detector parts j and h, and the adder 1908 adds the output voltages of the I/V converters 1903 and 1904 corresponding to the outputs of the detector parts h and g. The adder 1909 adds the outputs of the adders 1905 and 1908, so as to output an added signal corresponding to the outputs of the detector parts i, j, g and h. The subtracter 1910 subtracts the output of the adder 1907 from the output of the adder 1906, so as to output a difference signal corresponding to a difference between a sum of the outputs of the detector parts i and g and a sum of the outputs of the detector parts j and h. The comparator 1911 compares the outputs of the adders 1905 and 1908, and outputs the larger one of the outputs.

The comparator 1912 outputs the output signal of the subtracter 1910 to an output terminal 1920. In addition, the comparator 1912 compares the output signals of the adder 1909 and the comparator 1911, and outputs the larger output signal to an output terminal 1921. Furthermore, the comparator 1912 compares the signals at the output terminals 1920 and 1921, and outputs to an output terminal 1922 a signal which indicates the larger one of the signals at the output terminals 1920 and 1921.

If the comparator 1912 judges that the signal at the output terminal 1920 is larger than the signal at the output terminal 1921, the switches 1914 and 1915 are controlled by the signal from the output terminal 1922, so as to output the signals input to terminals A thereof. As a result, the circuit structure becomes basically the same as that of the sector mark detection circuit shown in FIG. 15 for the case where the 2-part photodetector 1303A is used in FIG. 13.

If the comparator 1912 judges that the signal at the output terminal 1921 is larger than the signal at the output terminal 1920, the switches 1914 and 1915 are controlled by the signal from the output terminal 1922, so as to output the signals input to terminals B thereof. Furthermore, if the comparator 1912 judges that the output signal of the comparator 1911 is larger than the output signal of the adder 1909, the comparator 1912 outputs the output signal of the comparator 1911. In this case, the circuit structure becomes basically the same as that of the sector mark detection circuit shown in FIG. 18 for the case where the 2-part photodetector 1303B is used in FIG. 13. On the other hand, if the comparator 1912 judges that the output signal of the adder 1909 is larger than the output signal of the comparator 1911, the comparator 1912 outputs the output signal of the adder 1909. In this case, the circuit structure becomes basically the same as that of the sector mark detection circuit shown in FIG. 6 for the case where the optical system shown in FIG. 4 and the sum signal (a+b) of the 2-part photodetector 409 are used as described above in the first embodiment of the optical storage unit.

According to this fourth embodiment of the optical storage unit, it is possible to detect the sector marks by switching and selecting one of three detection methods depending on the state of the signals reproduced from the optical disk.

Next, a description will be given of a fifth embodiment of the optical storage unit according to the present invention. This fifth embodiment of the optical storage unit detects the sector marks by using the 4-part photodetector 412 shown in FIG. 4 for generating the focus error signal (FES) and the tracking error signal (TES).

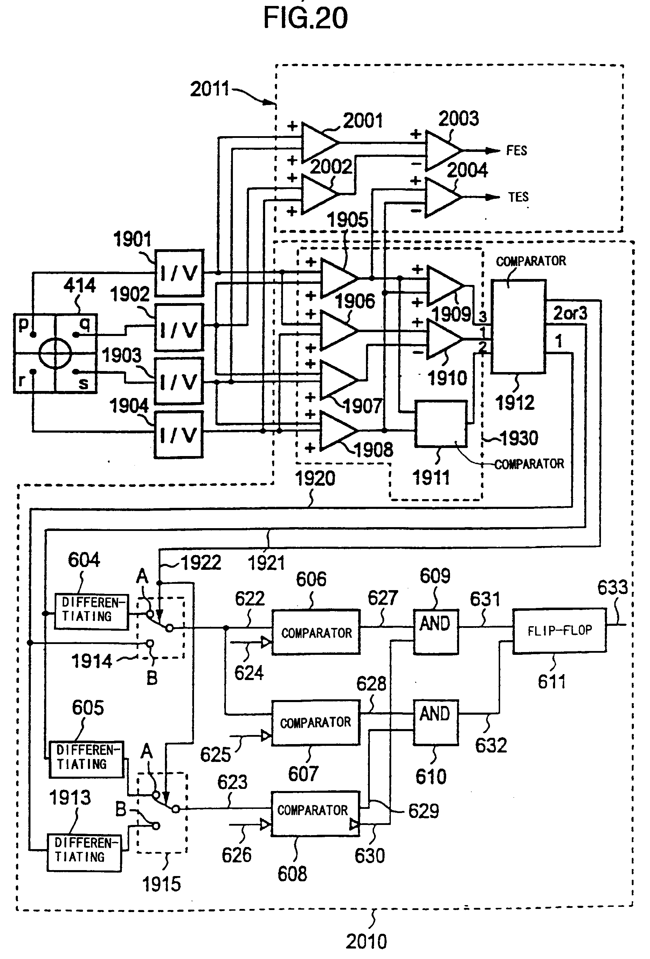

FIG. 20 is a system block diagram showing a sector mark detection circuit of the fifth embodiment of the optical storage unit. In FIG. 20, those parts which are the same as those corresponding parts in FIG. 19 are designated by the same reference numerals, and a description thereof will be omitted.

The sector mark detection circuit shown in FIG. 20 includes is provided with four current-to-voltage (I/V) converters 1901, 1902, 1903 and 1904 for respectively converting the output currents of the four detector parts p, q, r and s of the 4-part photodetector 414 into corresponding voltages, a broadband signal processor 2010, and a narrowband signal processor 2011. The broadband signal processor 2011 has the same construction as the sector mark detection circuit shown in FIG. 19. The narrowband signal processor 2011 includes adders 2001 and 2002, and subtracters 2003 and 2004.

In the narrowband signal processor 2011, the adder 2001 adds the output voltages of the I/V converters 1901 and 1903, so as to generate a signal corresponding to a sum of the outputs of the detector parts p and s. The adder 2002 adds the output voltages of the I/V converters 1902 and 1904, so as to generate a signal corresponding to a sum of the outputs of the detector parts q and r. The subtracter 2003 subtracts the output of the adder 2002 from the output of the adder 2001, so as to generate the focus error signal (FES). On the other hand, the subtracter 2004 subtracts the output of the adder 1908 from the output of the adder 1905, so as to generate the tracking error signal (TES). Hence, the focus error signal (FES) and the tracking error signal (TES) are generated based on the outputs of the 4-part photodetector 414.

On the other hand, the broadband signal processor 2010 detects the sector marks by carrying out the same operations as the sector mark detection circuit shown in FIG. 19 described above.

According to this fifth embodiment of the optical storage unit, it is possible to detect the sector marks using the outputs of the 4-part photodetector 414 which is originally used to generate the servo signals such as the focus error signal (FES) and the tracking error signal (TES). Accordingly, the construction of the optical system becomes simple since there is not need to provide a photodetector exclusively for detecting the sector marks.

Next, a description will be given of a fifth embodiment of the optical recording medium according to the present invention. In this embodiment of the optical recording medium, the width of the sector mark formed on the optical disk is the same as the groove width or, is larger than the groove width.

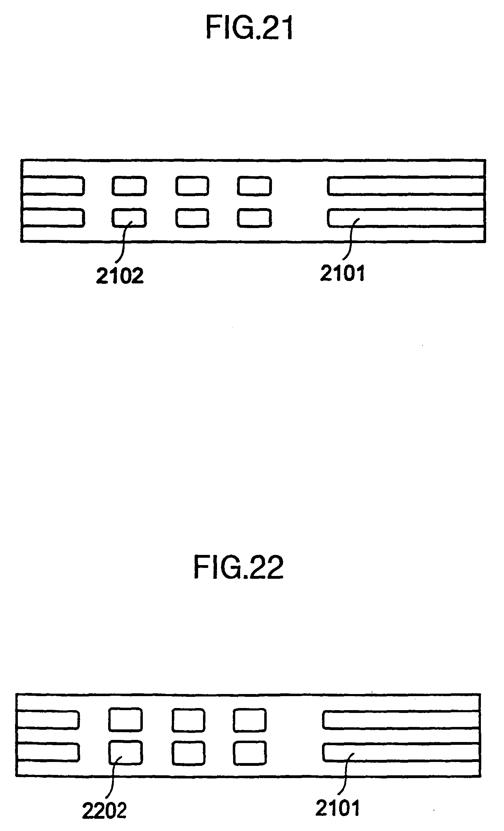

FIG. 21 is a diagram showing the sector marks for a case where a sector mark width is equal to a groove width. In FIG. 21, the width of a sector mark 2102 is equal to the width of a groove 2101.

On the other hand, FIG. 22 is a diagram showing the sector marks for a case where the sector mark width is greater than the groove width. In FIG. 22, the width of the sector mark 2102 is greater than the width of the groove 2101.

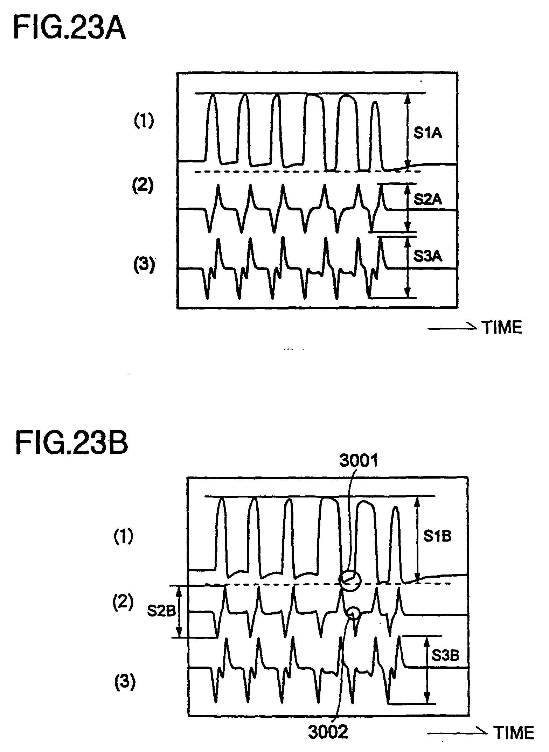

FIGS. 23A and 23B are diagrams for explaining detected waveforms of the sector marks. FIG. 23A shows the waveforms of the sector marks detected from the optical disk having the arrangement shown in FIG. 21 by use of the sector mark detection circuit shown in FIG. 19. FIG. 23B shows the waveforms of the sector marks detected from the optical disk having the arrangement shown in FIG. 22 by use of the sector mark detection circuit shown in FIG. 19.

FIG. 23A shows the sum signal waveform (1) output from the adder 1909 shown in FIG. 19, the first order differentiated signal waveform (2) output from the first order differentiating circuit 604 shown in FIG. 18 when the comparator 1912 selects the output of the adder 1909, and the difference signal waveform (3) output from the subtracter 1910 shown in FIG. 19, for the case where the optical disk has the sector mark arrangement shown in FIG. 21.

FIG. 23B shows the sum signal waveform (1) output from the adder 1909 shown in FIG. 19, the first order differentiated signal waveform (2) output from the first order differentiating circuit 604 shown in FIG. 18 when the comparator 1912 selects the output of the adder 1909, and the difference signal waveform (3) output from the subtracter 1910 shown in FIG. 19, for the case where the optical disk has the sector mark arrangement shown in FIG. 22.

As may be seen by comparing FIGS. 23A and 23B, signal amplitudes S1B, S2B and S3B of the signal waveforms (1), (2) and (3) shown in FIG. 23B are all larger than signal amplitudes S1A, S2A and S3A of the signal waveforms (1), (2) and (3) shown in FIG. 23B than in FIG. 23A. That is, larger signal amplitudes can be obtained when the sector mark arrangement shown in FIG. 22 is employed, as compared to that shown in FIG. 21. On the other hand, waveform distortions 3001 and 3002 appear in the signal waveforms (1) and (2) shown in FIG. 23B.

In this embodiment of the optical recording medium, the track pitch is 0.6 μm and the groove depth is 55 nm, for example. However, it is possible to optimize the track pitch, the groove depth, the groove width, the sector width and the like, so that the signal amplitude of the detected sector marks becomes large and the distortion in the waveform is suppressed.

In the description given heretofore, attention was drawn particularly on the sector marks in the ID part of the optical disk. Next, a description will be given of optimum methods of detecting the ID signal which indicate the position on the optical disk.

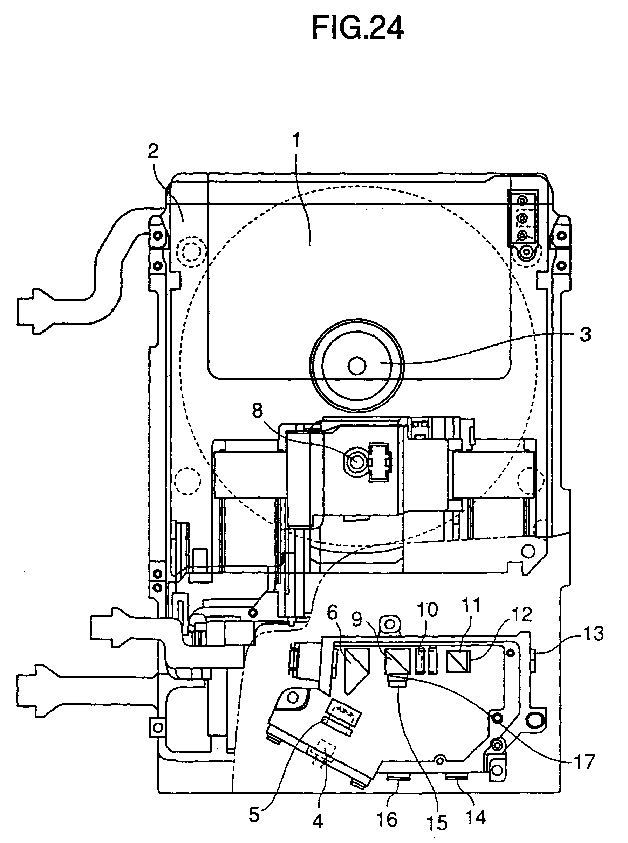

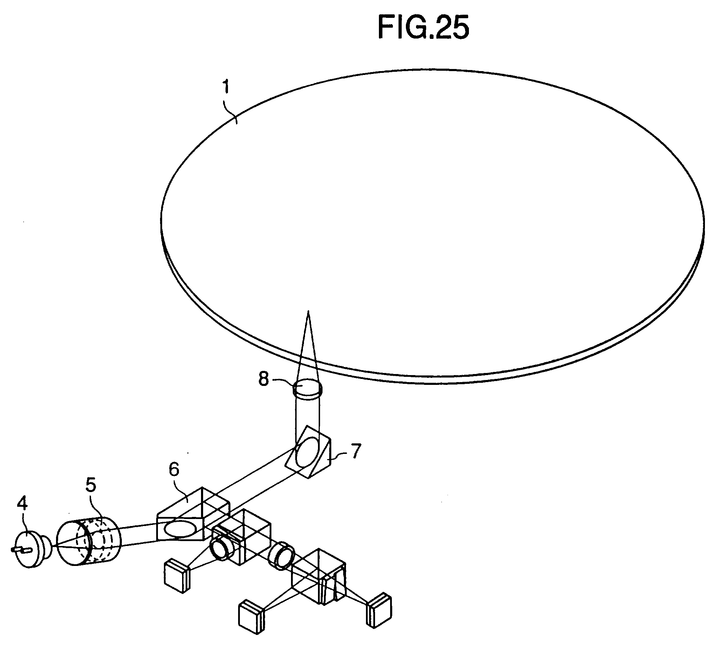

FIG. 24 is a diagram showing the internal construction of a sixth embodiment of the optical storage unit according to the present invention. In addition, FIG. 25 is a diagram showing an important part of an optical system of the sixth embodiment of the optical storage unit. In this embodiment of the optical storage unit, the present invention is applied to a magneto-optical disk.

In FIG. 24, a magneto-optical disk 1 is mounted on a spindle motor 3 in a state accommodated within a cartridge 2. A diffuse light emitted from a semiconductor laser 4 is converted into parallel light by a collimator lens 5. The parallel light from the collimator lens 5 is transmitted through a first polarization beam splitter 6 and is reflected by a mirror 7 which is omitted in FIG. 24 but shown in FIG. 25. The reflected light from the mirror 7 is converged on the magneto-optical disk 1 via an objective lens 8, from the back side of the paper in FIG. 24. In this state, a known magnetic field generator (not shown) applies a magnetic field on the magneto-optical disk 1 from the front side of the paper in FIG. 24, so as to form recording marks on the magneto-optical disk 1. The reflected light from the magneto-optical disk 1 then passes through the objective lens 8 and the mirror 7, and is reflected by the first polarization beam splitter 6 towards a second polarization beam splitter 9.

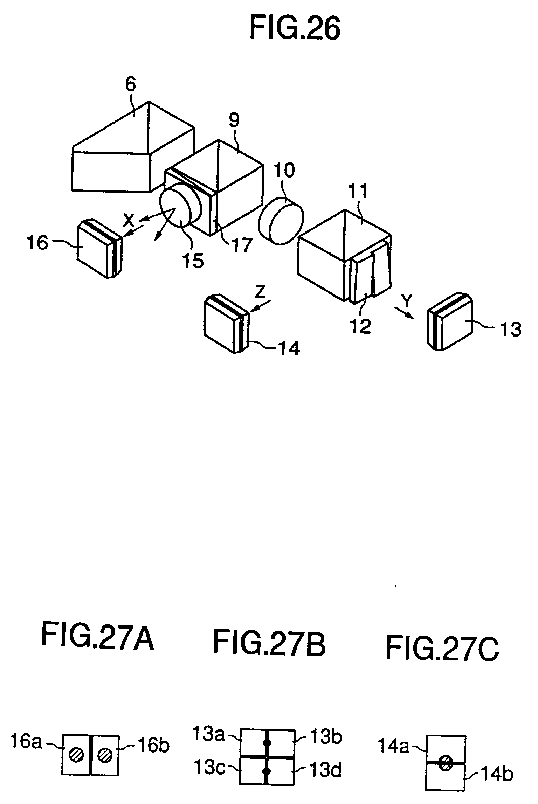

Next, a description will be given of a method of detecting the magneto-optical signal, the ID signal and the servo signals, by referring to FIGS. 26 and 27. The servo signals refer to the tracking error signal (TES) and the focus error signal (FES). FIG. 26 is a perspective view showing a part of an optical system for the returning light beam reflected from the magneto-optical disk 1 following the first polarization beam splitter 6 in the optical disk unit shown in FIGS. 24 and 25. In addition, FIGS. 27A through 27C are diagrams for explaining beam spots on photodetectors.

In FIG. 26, the returning light beam reflected from the magneto-optical disk 1 is reflected by the first polarization beam splitter 6, and is supplied to the second polarization beam splitter 9 which splits the light in terms of the light quantity. The light transmitted through the second polarization beam splitter 9 is supplied to a third polarization beam splitter 11 via a lens 10. The light transmitted through the third polarization beam splitter 11 is split into two light beams in a direction corresponding to the tangential (circumferential) direction of the magneto-optical disk 1 (hereinafter simply referred to as the tangential direction of the magneto-optical disk 1) by a Foucault unit 12, and then converged on a 4-part photodetector 13. FIG. 27B shows beam spots formed on the 4-part photodetector 13 when viewed in a direction Y in FIG. 26. A distance between the lens 10 and the 4-part photodetector 13 is set so that, in a state where the focal point of the objective lens 8 correctly matches the recording surface of the magneto-optical disk 1, the light beams from the Foucault unit 12 respectively irradiate an intermediate part between detector parts 13a and 13b of the 4-part photodetector 13 and an intermediate part between detector parts 13c and 13d of the 4-part photodetector 13.

If the focal distance of the objective lens 8 is set near, the light beams from the Foucault unit 12 are irradiated on the sides of the detector parts 13a and 13d. On the other hand, the light beams from the Foucault unit 12 are irradiated on the sides of the detector parts 13b and 13c if the focal distance of the objective lens 8 is set far. Accordingly, a signal (13a+13d)-(13b+13c) derived from the outputs of the detector parts 13a through 13d of the 4-part photodetector 13 is obtained as the focus error signal (FES) and used to control the position of the objective lens 8 by a known method so that the focus error signal (FES) becomes zero.

In the following description, the same reference numerals are used to designate the outputs of the corresponding detector parts of multiple-part photodetectors.

The light reflected by the third polarization beam splitter 11 is irradiated on a 2-part photodetector 14. FIG. 27C shows a beam spot formed on the 2-part photodetector 14 when viewed in a direction Z in FIG. 26. A difference between the light quantities of -1st order diffracted light and +1st order diffracted light from the groove on the magneto-optical disk 1, that is, a signal (14a-14b) derived from the outputs of detector parts 14a and 14b of the 2-part photodetector 14 is obtained as the tracking error signal (TES).

On the other hand, the light reflected by the second polarization beam splitter 9 is supplied to a Wollaston prism 17 and a lens 15. The Wollaston prism 17 and the lens 14 are adhered on the second polarization beam splitter 9. The light beam is split into a P-polarized light component and an S-polarized light component as the light exits the Wollaston prism 17. The P-polarized light component and the S-polarized light component separate in directions indicated by arrow in FIG. 26, and are irradiated on a 2-part photodetector 16. FIG. 27A shows beam spots formed on the 2-part photodetector 16 when viewed in a direction X in FIG. 26. A signal (16a-16b) derived from outputs of detector parts 16a and 16b of the 2-part photodetector 16 is obtained as the magneto-optical signal (MO), and a signal (16a+16b) derived from the outputs of the detector parts 16a and 16b of the 2-part photodetector 16 is obtained as the ID signal. In other words, the ID signal is detected as a sum total of the light quantities received by the 2-part photodetector 16. When reproducing the ID signal which is formed by embossed pits on the magneto-optical disk 1 in this manner, a change in the reflectivity at the embossed pits. For this reason, the ID signal corresponds to the change in the quantity of the returning light, and is obtained as the sum total signal regardless of the number of detector parts forming the multiple-part photodetector which is used to detect the ID signal.

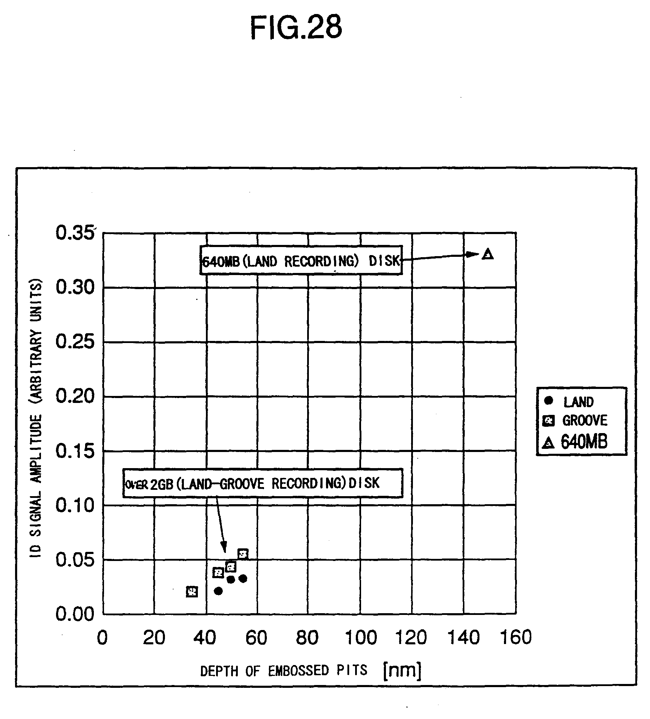

FIG. 28 is a diagram showing a relationship of an ID signal which is obtained from a sum total signal as described above, and a depth of embossed pits. In FIG. 28, a shaded triangular mark indicates a land recording characteristic of a 640 MB magneto-optical disk which employs the land recording, and black circular marks and shaded rectangular marks respectively indicate a land recording characteristic and a groove recording characteristic of an over-2GB magneto-optical disk employing the land-groove recording. In the case of the land recording, the ID signal which is obtained from the sum total signal has a sufficiently large amplitude. On the other hand, in the case of the land-groove recording, the data are also recorded on the grooves, and thus, the groove depth is made smaller so as to improve the signal-to-noise (S/N) ratio of the magneto-optical signal. For this reason, the depth of the embossed pits also becomes smaller in the case of the land-groove recording, thereby decreasing the amplitude of the ID signal which is obtained from the sum total signal. Hence, in the case of the land-groove recording, the S/N ratio of the magneto-optical signal and the amplitude of the ID signal which is obtained from the sum total signal are in a trade-off relationship. In other words, in the case of the land-groove recording, the S/N ratio of the magneto-optical signal improves if the groove depth is made smaller, but the amplitude of the ID signal which is obtained from the sum total signal becomes larger if the groove depth is made larger.

In the case of a phase change type optical disk, the phase change signal and the ID signal are both detected based on the difference of the reflectivities, and the above described problem of the trade-off relationship will not occur.

Next, a description will be given of embodiments of the present invention which can simultaneously improve the S/N ratio of the magneto-optical signal and detect the ID signal having a sufficiently large amplitude, even in the case of the land-groove recording.

In the following embodiments, the ID signal is not detected as a sum total signal of the light quantities of the embossed pits, but is detected as a change in the light quantity at end portions of the embossed pits. That is, the following embodiments detect the ID signal as a tangential push-pull (TPP) signal. In order to obtain this TPP signal, a photodetector for detecting the ID signal is made up of at least two detector parts which are divided in the tangential direction of the optical disk, and the ID signal is obtained from a difference of the outputs from the detector parts of this photodetector.

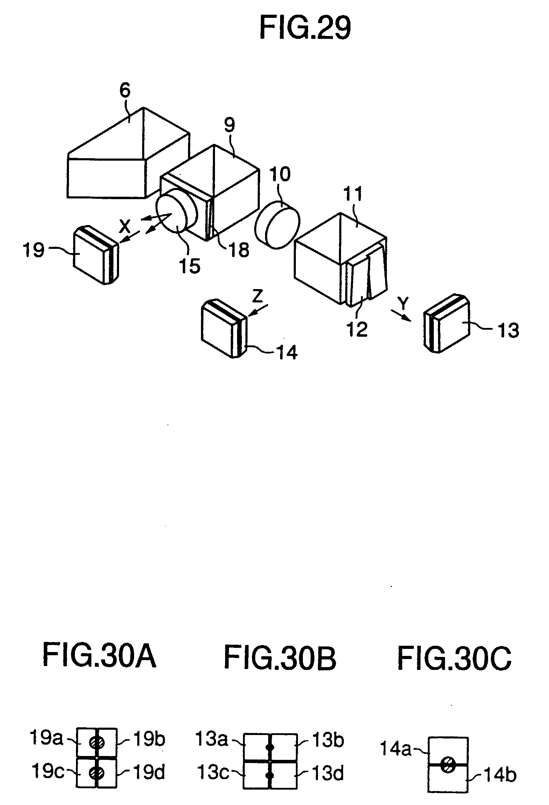

FIG. 29 is a perspective view showing an important part of an optical system of a seventh embodiment of the optical storage unit according to the present invention. In addition, FIGS. 30A through 30C are diagrams for explaining beam spots on photodetectors. In FIG. 29 and FIGS. 30A through 30C, those parts which are the same as those corresponding parts in FIGS. 24 through 26 and FIGS. 27A through 27C are designated by the same reference numerals, and a description thereof will be omitted. In each of the following embodiments, the present invention is applied to a magneto-optical disk.

In FIG. 29, the light transmitted through the second polarization beam splitter 9 is used for detecting the servo signals, similarly as in the case shown in FIG. 26. On the other hand, the light reflected by the second polarization beam splitter 9 is supplied to a Wollaston prism 18, but directions in which the P-polarized light component and the S-polarized light component are split in the Wollaston prism 18 is rotated by 90 degrees compared to the case shown in FIG. 26. With reference to the surface of the magneto-optical disk, the P-polarized light component and the S-polarized light component are split in a direction corresponding to the radial direction of the magneto-optical disk (hereinafter simply referred to as the radial direction of the magneto-optical disk). The P-polarized light component and the S-polarized light component are converged on a 4-part photodetector 19 via a lens 15. FIG. 30A shows beam spots formed on the 4-part photodetector 19 when viewed in a direction X in FIG. 29. In addition, FIG. 30B shows beam spots formed on the 4-part photodetector 13 when viewed in a direction Y in FIG. 29. FIG. 30C shows a beam spot formed on the 2-part photodetector 14 when viewed in a direction Z in FIG. 29.

The 4-part photodetector 19 is not only divided into two in the direction in which the light beam is polarized and split by the Wollaston prism 18, that is, not only divided into two in the radial direction of the magneto-optical disk, but is also divided into two in the tangential direction of the magneto-optical disk which is perpendicular to the radial direction. The magneto-optical signal (MO) is detected from a difference signal of the polarized and split directions, that is, a signal (19a+19b)-(19c+19d) derived from outputs of detector parts 19a through 19d of the 4-part photodetector 19. In addition, the ID signal is detected from the TPP signal, that is, a signal (19a+19c)-(19b+19d) derived from the outputs of detector parts 19a through 19d of the 4-part photodetector 19.

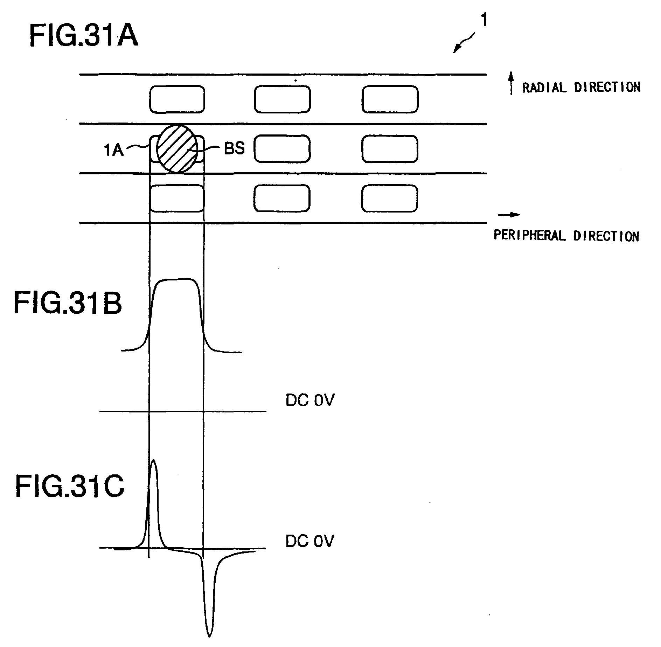

FIGS. 31A through 31C are diagrams for explaining a relationship of ID signals on the magneto-optical disk and waveforms of detected ID signals. FIG. 31A shows an ID signal which is formed as an embossed pit 1A on the magneto-optical disk 1, and a beam spot BS is indicated by the hatching. FIG. 31B shows a signal waveform of the ID signal which is obtained from a sum total signal ( 19a+19b+19c+19d ) which is derived from the outputs of detector parts 19a through 19d of the 4-part photodetector 19. In addition, FIG. 31C shows a signal waveform of the ID signal which is obtained from the TPP signal (19a+19c)-(19b+19d) which is derived from the outputs of detector parts 19a through 19d of the 4-part photodetector 19. As shown in FIG. 31B, the ID signal which is obtained from the sum total signal has a waveform which has a raised (or lowered) DC level at the part where the embossed pit 1A is provided as compared to portions where no embossed pit is provided. On the other hand, as shown in FIG. 31C, the ID signal which is obtained from the TPP signal has a waveform which makes a sharp change in the signal amplitude at edge portions of the embossed pit 1A, and theoretically has a DC voltage of 0 V at a part which falls within the beam spot BS, such as the central portion of the embossed pit 1A. The waveform shown in FIG. 31C corresponds to a differentiated result which is obtained by differentiating the waveform shown in FIG. 31B. Actually, due to electrical offsets of the detecting systems, the center of the amplitude of the ID signal does not become 0 V.

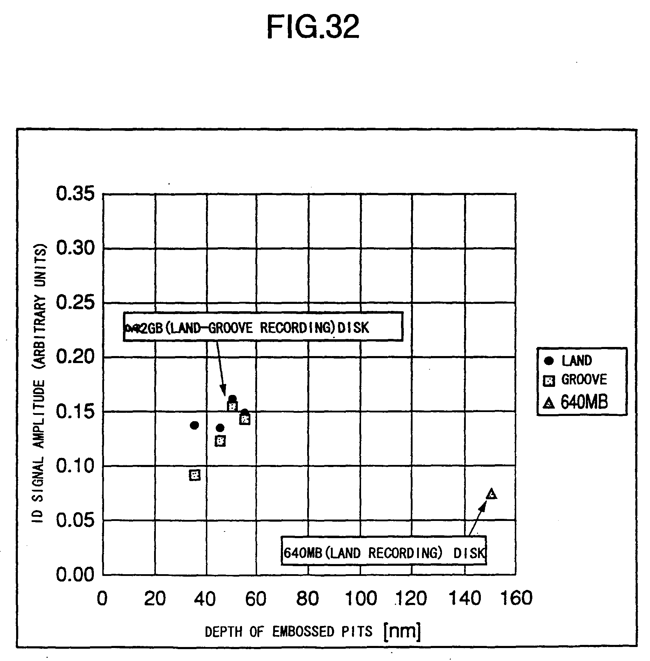

FIG. 32 is a diagram showing a relationship of the ID signal obtained from a TPP signal, and the depth of the embossed pits. In FIG. 32, a shaded triangular mark indicates a land recording characteristic of a 640 MB magneto-optical disk which employs the land recording, and black circular marks and shaded rectangular marks respectively indicate a land recording characteristic and a groove recording characteristic of an over-2GB magneto-optical disk employing the land-groove recording. In the case of the land-groove recording, the data are also recorded on the groove, and the groove depth is made small so as to improve the S/N ratio of the magneto-optical signal. Due to the small groove depth, the depth of the embossed pits is also small. However, the amplitude of the ID signal which is obtained from the TPP signal does not decrease as in the case of the ID signal which is obtained from the sum total signal shown in FIG. 28. The ID signal which is obtained from the TPP signal has approximately two to three times the amplitude of the ID signal which is obtained from the sum total signal. On the other hand, in the case of the land recording, the amplitude of the ID signal which is obtained from the TPP signal is smaller than the amplitude of the ID signal which is obtained from the sum total signal.

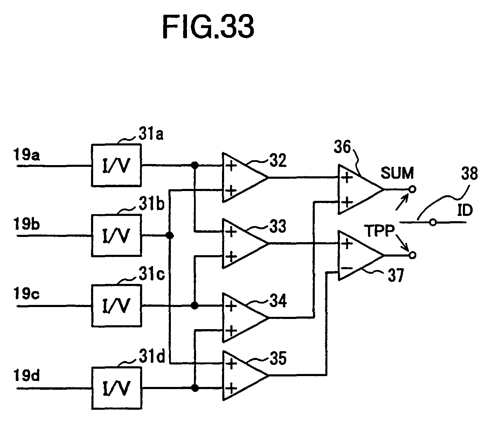

Therefore, when detecting the ID signal, it may be seen that it is effective to obtain the ID signal from the sum total signal when using the magneto-optical disk employing the land recording, and to obtain the ID signal from the TPP signal when using the magneto-optical disk employing the land-groove recording. In other words, a detection system shown in FIG. 33 may be used, so as to obtain the ID signal from the sum total signal or the TPP signal depending on the magneto-optical disk which is used.

FIG. 33 is a system block diagram showing an embodiment of the detection system of the seventh embodiment of the optical storage unit. The detection system shown in FIG. 33 includes current-to-voltage (I/V) converters 31a through 31d, adders 32 through 36, a subtracter 37, and a switch 38. The outputs from the corresponding detector parts 19a through 19d of the 4-part photodetector 19 are input to the I/V converters 31a through 31d, and a sum total signal SUM=(19a+19b+19d+19d) is output from the adder 36. A TPP signal TPP=(19a+19c)- (19b+19d) is output from the subtracter 37. The switch 38 is switched to output the sum total signal SUM as the ID signal when the magneto-optical disk 1 employs the land recording, and to output the TPP signal as the ID signal when the magneto-optical disk 1 employs the land-groove recording. The switch 38 may be switched manually, or automatically as will be described later. Accordingly, it is possible to switch the detection system so as to obtain the optimum ID signal depending on the magneto-optical disk 1 which is used.

Next, a description will be given of an embodiment which detects the TPP signal using the Foucault unit 12.

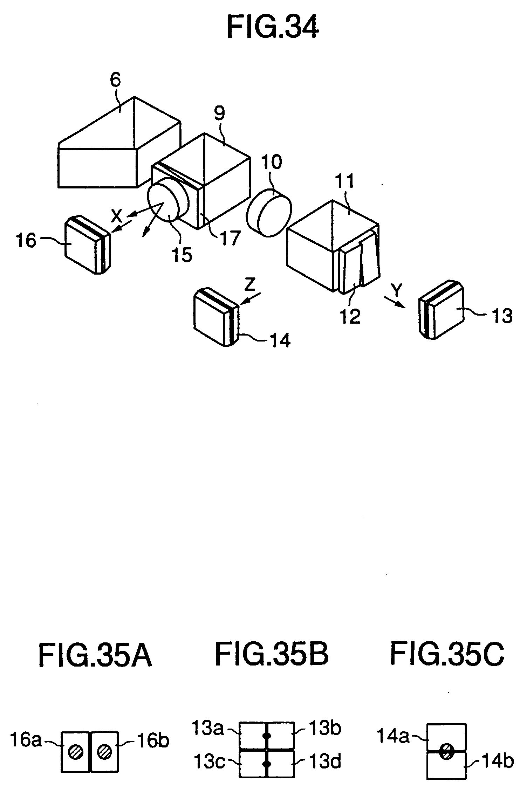

FIG. 34 is a perspective view showing an important part of an eighth embodiment of the optical storage unit according to the present invention. In addition, FIGS. 35A through 35C are diagrams for explaining beam spots on photodetectors. In FIGS. 34 and 35A through 35C, those parts which are the same as those corresponding parts in FIGS. 24 through 26 and FIGS. 27A through 27C are designated by the same reference numerals, and a description thereof will be omitted.

In this embodiment, the TPP signal which is obtained based on signals from the detector parts 13a through 13d of the 4-part photodetector 13, is detected as the ID signal. In the Foucault unit 12, the returning light is split into two in the tangential direction of the magneto-optical disk 1, and are converged on the 4-part photodetector 13. FIG. 35B shows beam spots formed on the 4-part photodetector 13 when viewed in a direction Y in FIG. 34. FIG. 35A shows beam spots formed on a2-part photodetector 16 when viewed in a direction X in FIG. 34. Further, FIG. 35C shows a beam spot formed on the 2-part photodetector 14 when viewed in a direction Z in FIG. 34.

Accordingly, based on the signals from the detector parts 13a through 13d of the 4-part photodetector 13, the TPP signal is obtained from ID

(TPP)=(13a+13b)-(13c+13d). In addition, when obtaining the ID signal from the sum total signal, the sum total signal is obtained from ID (SUM)=(16a+16b) based on signals from detector parts of the 2-part photodetector 16. When simultaneously detecting the focus error signal (FES) having a frequency of several tens of kHz and the ID signal having a frequency of 10 MHz by use of the 4-part photodetector 13, the 4-part photodetector 13 must be designed to cover such signal bands, and in the detection system, it is necessary to separate the bands of the focus error signal (FES) and the ID signal.

The focus error signal (FES) is obtained from FES=(13a+13d)-(13b+13c), the tracking error signal (TES) is obtained from TES=(14a-14b), and the magneto-optical signal (MO) is obtained from MO=(16a-16b).

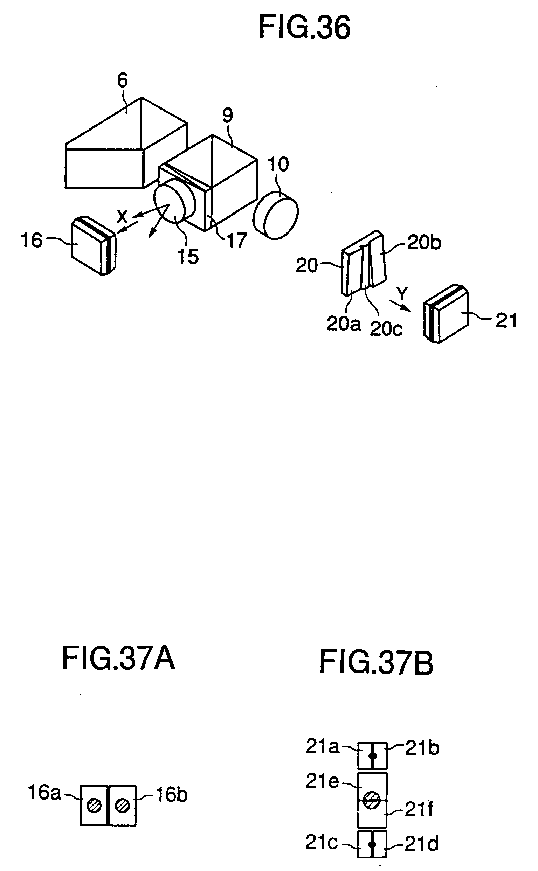

FIG. 36 is a perspective view showing an important part of an optical system of a ninth embodiment of the optical storage unit according to the present invention. In addition, FIGS. 37A and 37B are diagrams for explaining beam spots on photodetectors. In FIGS, 36, 37A and 37B, those parts which are the same as those corresponding parts in FIGS. 24 through 26 and FIGS. 27A through 27C are designated by the same reference numerals, and a description thereof will be omitted.

This embodiment differs from the eighth embodiment described above, in that a Foucault unit 20 is divided into three parts in the tangential direction of the magneto-optical disk 1. In addition, the polarization beam splitter 11 and the 2-part photodetector 14 shown in FIG. 24 are omitted in FIG. 36. A central part 20c between side parts 20a and 20b of the Foucault unit 20 has a spherical lens shape, and a portion of the returning light passing through this central part 20c is irradiated on a 6-part photodetector 21 without changing direction. The 6-part photodetector 21 is made up of six detector parts 21a through 21f. A focal distance of the light portion passing through the central part 20c of the Foucault unit 20 is different from focal distances of light portions passing through the side parts 20a and 20b. Thus, if a control is carried out to make the focus error signal (FES) zero, a beam spot formed on the 6-part photodetector 21 by the light portion passing through the central part 20c becomes larger than beam spots formed on the 6-part photodetector 21 by the light portions passing through the side parts 20a and 20b. FIG. 37B shows the beam spots formed on the 6-part photodetector 21 when viewed in a direction Y in FIG. 36. In addition, FIG. 37A shows beam spots formed on the 2-part photodetector 16 when viewed in a direction X in FIG. 36. Hence, this embodiment detects the TPP signal using the portions of the returning light excluding the central portion of the returning light.

Therefore, the TPP signal is obtained from ID (TPP)=(21a+21b)-(21c+21d), and the sum total signal SUM is obtained from ID (SUM)=(16a+16b). Furthermore, the focus error signal (FES) is obtained from FES=(21a+21d)-(21b+21c), and the tracking error signal (TES) is obtained from TES=(21e-21f).

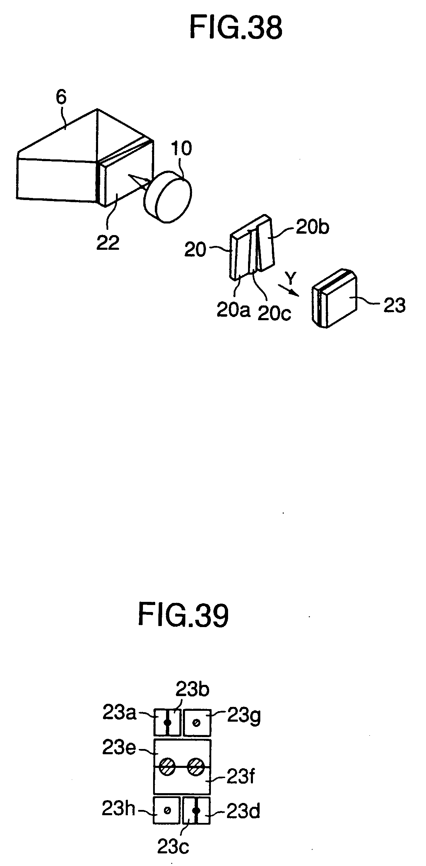

FIG. 38 is a perspective view showing an important part of an optical system of a tenth embodiment of the optical storage unit according to the present invention. In addition, FIG. 39 is a diagram for explaining beam spots on a photodetector. In FIGS. 38 and 39, those parts which are the same as those corresponding parts in FIGS. 24 through 26 and 36 are designated by the same reference numerals, and a description thereof will be omitted.

This embodiment differs from the ninth embodiment described above, in that a Wollaston prism 22 is arranged linearly with respect to the servo signal detection system. For this embodiment, the polarization beam splitter 9, the lens 15 and the 2-part photodetector 16 shown in FIG. 36 are omitted in this embodiment. The Wollaston prism 22 shown in FIG. 38 is fixed on the polarization beam splitter 6, and the light passing through the Wollaston prism 22 is split into two in directions of the arrows, that is, into the P-polarized light component and the S-polarized light component. Similarly as in the case shown in FIG. 36, the P-polarized light component and the S-polarized light component pass through the lens 10 and the Foucault unit 20, and are irradiated on a 8-part photodetector 23. The 8-part photodetector 23 is made up of eight detector parts 23a through 23h. In other words, two sets of three light beams which are similar to those obtained in FIG. 36 exist in the directions split by the Wollaston prism 22. FIG. 39 shows beam spots formed on the 8-part photodetector 23 when viewed in a direction Y In FIG. 38.

The focus error signal (FES), the tracking error signal (TES) and the TPP signal may be detected similarly as in the case shown in FIG. 36. In other words, the focus error signal (FES) is obtained from FES=(23a+23d)-(23b+23c), and the tracking error signal (TES) is obtained from TES=(23e-23f). The TPP signal is obtained from ID (TPP)=(23a+23b)-(23c+23d). In addition, the sum total signal SUM is obtained from ID (SUM)=23a+23b+23h+23c+23d+23g, and the magneto-optical signal (MO) is obtained from MO=(23a+23b+23h)-(23c+23d+23g).

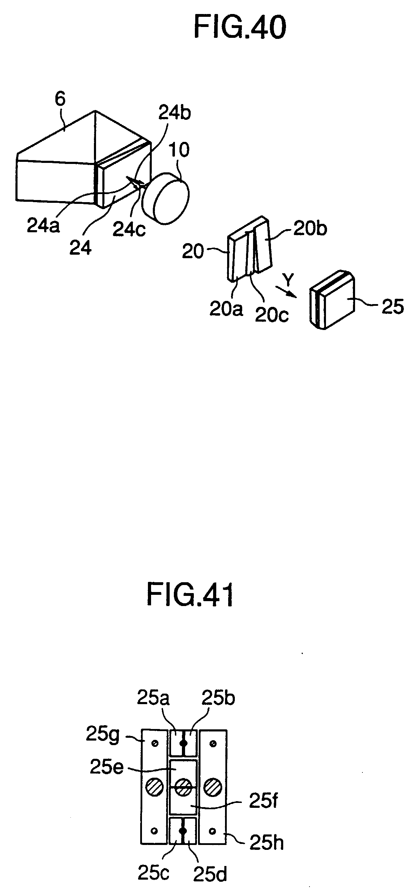

FIG. 40 is a perspective view showing an important part of an optical system of an eleventh embodiment of the optical storage unit according to the present invention. In addition, FIG. 41 is a diagram for explaining beam spots on a photodetector. In FIGS. 40 and 41, those parts which are the same as those corresponding parts in FIGS. 24 through 26 and 36 are designated by the same reference numerals, and a description thereof will be omitted.

This embodiment differs from the tenth embodiment described above, in that a Wollaston prism 24 splits the returning light into three. Of the light beams exiting from the Wollaston prism 24, the P-polarized light components travel in the directions of arrows 24a and 24c in FIG. 40, and the S-polarized light components travel in the directions of arrows 24b and 24c in FIG. 40. These P-polarized light components and S-polarized light components are irradiated on a 8-part photodetector 25 via the Foucault unit 20. The 8-part photodetector 25 is made up of eight detector parts 25a through 25h. Accordingly, three sets of three light beams which are similar to those obtained in FIG. 36 exist in the directions split by the Wollaston prism 24. FIG. 41 shows beam spots formed on the 8-part photodetector 25 when viewed in a direction Y in FIG. 40.

The focus error signal (FES), the tracking error signal (TES), the TPP signal and the magneto-optical signal (MO) may be detected similarly as in the case shown in FIG. 38. In other words, the focus error signal (FES) is obtained from FES=(25a+25d)-(25b+25c) , and the tracking error signal (TES) is obtained from TES=(25e-25f) . The TPP signal is obtained from ID (TPP)=(25a+25b)- (25c+25d) . In addition, the sum total signal SUM is obtained from ID (SUM)=25g+25h , and the magneto-optical signal (MO) is obtained from MO=25g-25h .

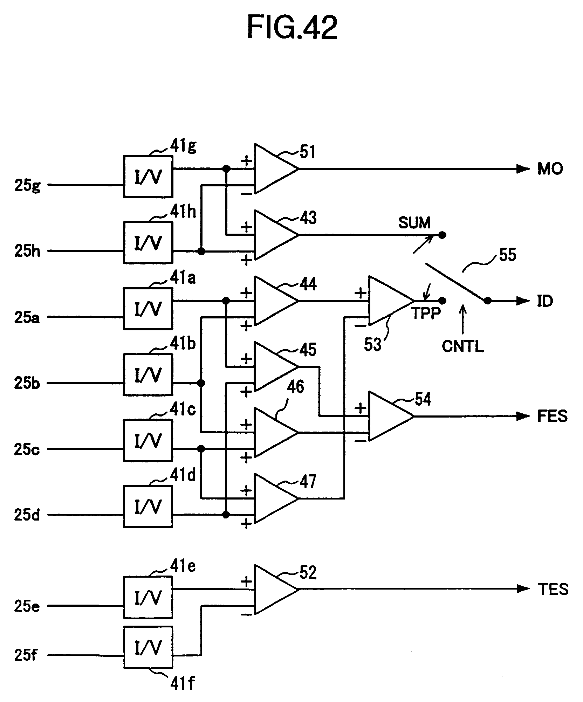

FIG. 42 is a system block diagram showing an embodiment of a detection system of the eleventh embodiment of the optical storage unit. The detection system shown in FIG. 42 includes current-to-voltage (I/V) converters 41a through 41h, adders 43 through 47, subtracters 51 through 54, and a switch 55 which are connected as shown. Signals from corresponding detector parts 25a through 25h of a 8-part photodetector 25 are input to the I/V converters 41a through 41h, and a sum total signal SUM=25g+25h is output from the adder 43, and a TPP signal TPP=(25a+25b)-(25c+25d) is output from the subtracter 53. The switch 55 is switched in response to a control signal CNTL so as to output the sum total signal SUM as the ID signal when the magneto-optical disk 1 employs the land recording, and to output the TPP signal as the ID signal when the magneto-optical disk 1 employs the land-groove recording. The switching of the switch 55 in response to the control signal CNTL may be carried out manually, or automatically as will be described later.

Accordingly, it is possible to switch the detection system depending on the magneto-optical disk 1 which is used, so as to output the optimum ID signal. A magneto-optical signal MO=25g-25h is output from the subtracter 51. In addition, a focus error signal FES=(25a+25d)-(25b+25c) is output from the subtracter 54, and a tracking error signal TES=(25e-25f) is output from the subtracter 52.

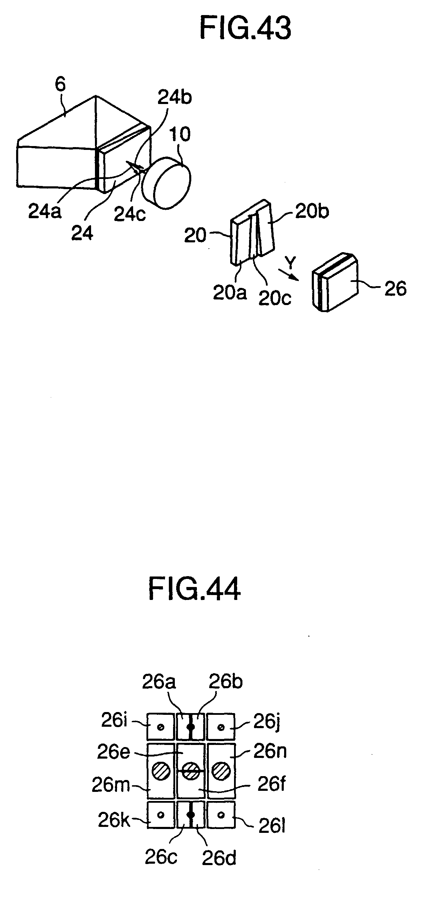

FIG. 43 is a perspective view showing an important part of an optical system of a twelfth embodiment of the optical storage unit according to the present invention. In addition, FIG. 44 is a diagram for explaining beam spots on a photodetector. In FIGS. 43 and 44, those parts which are the same as those corresponding parts in FIGS. 24 through 26 and 40 are designated by the same reference numerals, and a description thereof will be omitted.

This embodiment differs from the eleventh embodiment described above, in that a 12-part photodetector 26 is used in place of the 8-part photodetector 25. Otherwise, the optical system shown in FIG. 43 is the same as that shown in FIG. 40. The 12-part photodetector 26 is made up of detector parts 26a through 26l. In this embodiment, it is possible to separate the focus error signal (FES), the tracking error signal (TES), the ID signal and the magneto-optical signal (MO) on a single photodetector, that is, the 12-part photodetector 26. FIG. 44 shows beam spots formed on the 12-part photodetector 26 when viewed in a direction Y in FIG. 43.

The focus error signal (FES) is obtained from FES=(26a+26d)-(26b+26c) , and the tracking error signal (TES) is obtained from TES=(26e-26f) . The TPP signal is obtained from ID (TPP)=(26i+26j)- (26k+26l) . In addition, the sum total signal SUM is obtained from ID (SUM)=26i+26j+26k+26l , and the magneto-optical signal MO is obtained from MO=26m- 26n .

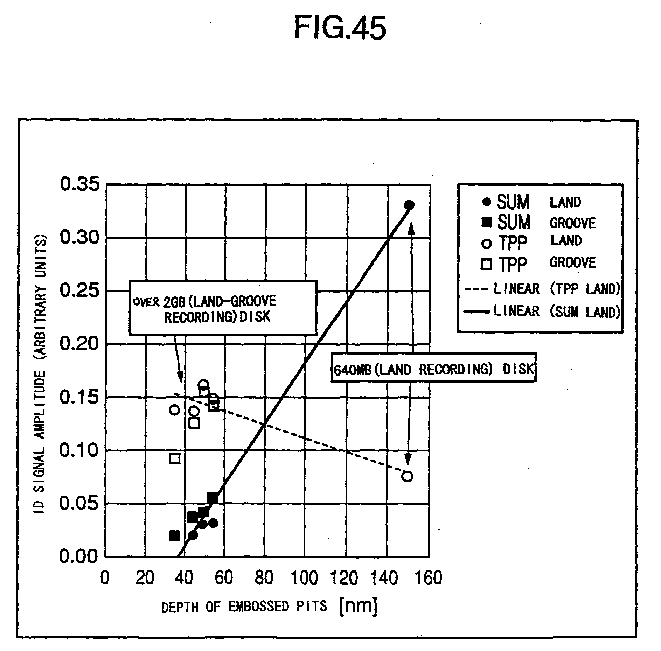

FIG. 45 is a diagram for explaining a relationship of an ID signal amplitude and the depth of the embossed pits. In FIG. 45, the ordinate indicates the amplitude of the ID signal, and the abscissa indicates the depth of the embossed pits. Black circular marks indicate the sum total signal SUM which is obtained in the case of the land recording, and black rectangular marks indicate the sum total signal SUM which is obtained in the case of the groove recording. Further, white circular marks indicate the TPP signal which is obtained in the case of the land recording, and white rectangular marks indicate the TPP signal which is obtained in the case of the land recording.

From results of experiments conducted by the present inventors, it is more advantageous to detect the ID signal from the sum total signal SUM when the depth of the embossed pits is large as in the case of the 640 MB magneto-optical disk. On the other hand, it is more advantageous to detect the ID signal from the TPP signal when the depth of the embossed pits is small as in the case of the over-2GB magneto-optical disk. When an approximation line (or curve) is obtained based on measured values of the sum total signal SUM for the land recording, the approximation line becomes as indicated by a solid line in FIG. 45. On the other hand, when an approximation line (or curve) is obtained base on measured values of the TPP signal for the land recording, the approximation line becomes as indicated by a phantom line in FIG. 45. As may be seen from FIG. 45, the amplitude of the sum total signal SUM is larger at depths of the embossed pits greater than approximately 80 nm, and the amplitude of the TPP signal is larger at depths of the embossed pits smaller than approximately 80 nm.

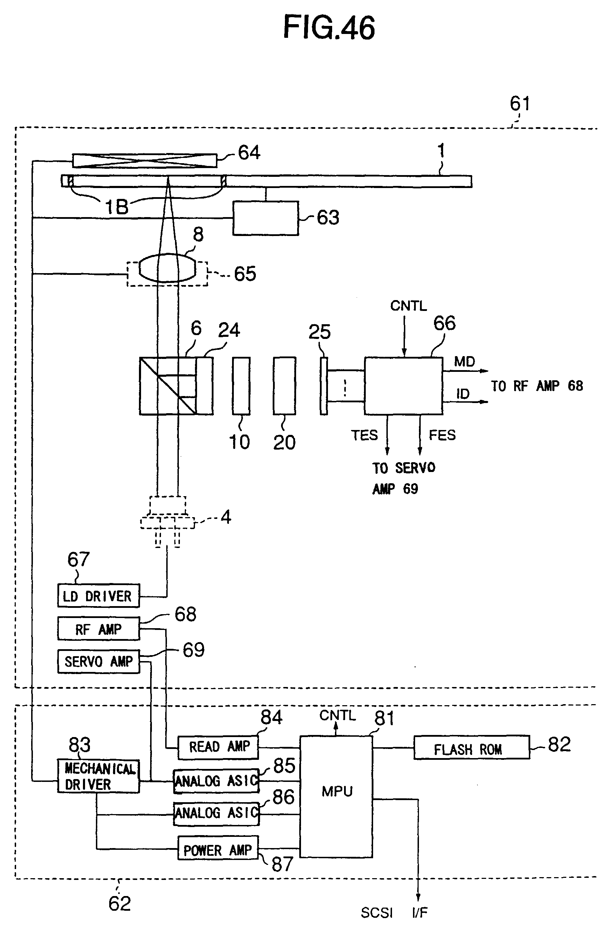

Next, a description will be given of a case where the sum total signal SUM and the TPP signal are automatically switched and detected as the ID signal depending on the magneto-optical disk which is used, by referring to FIG. 46. FIG. 46 is a diagram for explaining switching of ID signals. In FIG. 46, it is assumed for the sake of convenience that the automatic switching of the ID signals is applied to the twelfth embodiment described above, Of course, this automatic switching of the ID signals is similarly applicable to any of the embodiments described above.

In FIG. 46, those parts which are the same as those corresponding parts in FIGS. 25 and 40 are designated by the same reference numerals, and a description thereof will be omitted. An optical disk unit shown in FIG. 46 generally includes a head part 61 and a signal processor 62. The head part 61 includes a motor 63 for rotating the magneto-optical disk 1, a magnetic field generator 64, a driving unit 65 which drives the objective lens 8, a detection system 66 having the construction shown in FIG. 42, a laser diode (LD) driver 67 which drives the semiconductor laser 4, an RF amplifier 68, and a servo amplifier 69. The magneto-optical signal MO and the ID signal output from the detection system 66 are supplied to the FR amplifier 68, and the focus error signal FES and the tracking error signal TES are supplied to the servo amplifier 69. The control signal CNTL which is output from a MPU 81 within the signal processor 62 is supplied to the switch 55 within the detection system 66.

On the other hand, the signal processor 62 includes the MPU 81, a flash ROM 82, a mechanical driver 83, a read amplifier 84, analog ASICs 85 and 86, and a power amplifier 87. The mechanical driver 83 controls the driving unit 65 so as to carry out a focus control and a tracking control based on the focus error signal FES and the tracking error signal TES which are obtained from the servo amplifier 79, under the control of the MPU 81. In addition, the mechanical driver 83 controls the motor 63, and controls the magnetic field generator 64 at the time of the recording, under the control of the MPU 81. The MPU 81 processes the ID signal and the magneto-optical signal MO which are input via the read amplifier 84, and for example, supplies the processed magneto-optical signal MO to another processor via an SCSI interface (I/F) (not shown).

When the magneto-optical disk 1 is inserted into the optical disk unit, the light beam from the semiconductor laser 4 reads a control track 1B on the inner or outer periphery of the magneto-optical disk 1 by making a seek, so as to recognize the type of the magneto-optical disk 1 by the MPU 81. The control track 1B is recorded with disk type information in the form of embossed pits. The disk type information includes information which indicate the track pitch, the sector length per track, whether the land recording is employed or whether the land-groove recording is employed, and the like. By reading the information from the control track 1B, it is possible to recognize whether the inserted magneto-optical disk 1 is a 128M to 1.3 GB magneto-optical disk or, an over-2 GB magneto-optical disk.

Parameters related to the depth of the embossed pits are not directly recorded on the magneto-optical disk 1. However, information prestored in the flash ROM 82 indicates the types of the magneto-optical disks for which the sum total signal SUM is to be used as the ID signal and the types of the magneto-optical disks for which the TPP signal is to be used as the ID signal. For example, the flash ROM 82 prestores information indicating that the sum total signal SUM is to be used as the ID signal with respect to the 128 MB to 1.3 GB magneto-optical disks having embossed pits with relatively large depths, and that the TPP signal is to be used as the ID signal with respect to the over-2 GB magneto-optical disks having embossed pits with relatively small depths. Accordingly, based on the information read from the control track 1B, the MPU 81 generates the control signal CNTL so as to select the ID signal which is appropriate for the magneto-optical disk 1 which is inserted into the optical disk unit. The control signal CNTL from the MPU 81 is supplied to the switch 55 within the detection system 66 of the head part 61.

The disk type information recorded on the control track 1B needs to be detectable as the sum total signal SUM regardless of the type of the magneto-optical disk, so as to enable reading of the disk type information even in a low performance optical disk unit designed for the 128 MB magneto-optical disk, for example. For this reason, in the over-2 GB magneto-optical disk, for example, it is desirable to record the disk type information on the control track 1B by taking measures such as recording the disk type information on the groove having the higher modulation factor or, increasing the mark length, so as to facilitate detection of the sum total signal SUM.

Of course, the constructions of the head part 61 and the signal processor 82 are not limited to those shown in FIG. 46, and it is possible to generate the control signal CNTL for switching the sum total signal SUM and the TPP signal using other known constructions.

As described above, even if the depth of the embossed pits are made small in accordance with the track groove depth which is suited for the data reproduction, it is possible to detect an ID signal having a sufficiently high amplitude without sacrificing the S/N ratio of the reproduced data signal. Particularly when the MSR technology is employed, it is possible to reproduce a satisfactory ID signal if the track depth is set small to $\lambda/8$ and the track depth is set to $\lambda/4$ for the normal magneto-optical recording. However, although a more satisfactory ID signal can be reproduced when the depth of the embossed pits is larger, it becomes more difficult to make the substrate of the optical recording medium by use of a stamper if different depths are used for the ID signal and the track groove. Accordingly, when consideration is given to the ease with which the substrate of the optical recording medium can be produced using the stamper, it is desirable that the ID signal and the track groove have approximately the same depth.

Further, the present invention is not limited to these embodiments, but various variations and modifications may be made without departing from the scope of the present invention.

**Claims**

1. An optical recording medium comprising:

    a substrate having a land and a groove alternately arranged in a predetermined direction;
    a data recording region provided on the land and the groove; and
    an identification mark recording region provided on only one of the land and the groove and recorded with a data block identification mark.

2. The optical recording medium as claimed in claim 1, wherein the data block identification mark is made of a projecting part formed on the groove and having approximately the same height as the land or, made of a cavity part formed on the land and having approximately the same depth as the groove.

3. The optical recording medium as claimed in claim 1, further comprising:

    a first identification information recording region recorded with identification information for identifying the data recording region on the land; and
    a second identification information recording region recorded with identification information for identifying the data recording region on the groove,
    said data block identification mark being recorded on only one of the first identification information recording region and the second identification recording region.

4. The optical recording medium as claimed in claim 3, wherein the second identification recording region is staggered with respect to the first identification information recording region in a direction of a track which is formed by the land or the groove.

5. The optical recording medium as claimed in claim 3, wherein information for identifying the data recording region is recorded by a magneto-optical recording.

6. The optical recording medium as claimed in claim 2, wherein a width of the projecting part forming the data block identification mark is greater than or equal to a width of the land, and a width of the cavity part forming the data block identification mark is greater than or equal to a width of the groove.

7. The optical recording medium as claimed in claim 1, wherein a depth of the groove forming the data recording region is different from a height of the projecting part and a depth of the cavity part which form the data block identification mark.

8. The optical recording medium as claimed in claim 1, further comprising:

    a buffer track formed solely of a track and arranged at a boundary of the regions which are divided in the predetermined direction on the substrate.

9. A method of detecting a data block identification mark from an optical recording medium which is provided with a substrate having a land and a groove alternately arranged in a predetermined direction, a data recording region provided on the land and the groove, and an identification mark recording region provided on only one of the land and the groove and recorded with a data block identification mark, said method comprising the step of:

    (a) detecting the data block identification mark from a land or a groove having no identification mark recording region, based on a crosstalk signal from a data block identification mark of an adjacent groove or land.

10. An optical storage unit for writing and/or reading information from an optical recording medium which is provided with a substrate having a land and a groove alternately arranged in a predetermined direction, a data recording region provided on the land and the groove, and an identification mark recording region provided on only one of the land and the groove and recorded with a data block identification mark, said optical storage unit comprising:

    an identification mark detecting section detecting the data block identification mark from a land or a groove having no identification mark recording region, based on a crosstalk signal from a data block identification mark of an adjacent groove or land;
    a first detector detecting data recorded on the data recording region; and
    a second detector detecting the data block identification mark.

11. The optical storage unit as claimed in claim 10, wherein said second detector detects components of a light beam which is split into at least two in a direction of a track on the optical recording medium and/or a direction traversing the track on the optical recording medium.

12. The optical storage unit as claimed in claim 11, wherein said identification mark detecting section detects the data block identification mark from one of a sum signal and a difference signal derived from two output signals from the second detector which detects the light which is split into two in the direction of the track on the optical recording medium.

13. The optical storage unit as claimed in claim 11, wherein said identification mark detecting section detects the data block identification mark from one of a sum signal and a first difference signal derived from two output signals from the second detector which detects the light which is split into two in the direction traversing the track on the optical recording medium.

14. An optical storage unit usable with an optical recording medium which has a track groove and pits with the same depth, and the track groove has a predetermined depth suited for data reproduction, said optical storage unit comprising:

a photodetector detecting a returning light which is reflected from the optical recording medium and is split into at least two in a direction of the track on the optical recording medium; and
an ID signal detector obtaining a difference signal of output signals of the photodetector which detects the light which is split into at least two in the direction of the track on the optical recording medium, and outputting the difference signal as the ID signal.

15. An optical storage unit for optically reading from an optical recording medium an ID signal which indicates a position on the optical recording medium by embossed pits, said optical storage unit comprising:

a photodetector, having detector parts divided into at least two in a direction corresponding to a track on the optical recording medium, detecting returning light beam which is reflected from the optical recording medium; and
an ID signal detector detecting a difference signal in the direction of the track based on output signals of the detector parts of the photodetector, and outputting the difference signal as a detected ID signal.

16. The optical storage unit as claimed in claim 13, wherein:

said detector parts of the photodetector are divided so as to detect components of the light beam split into two in directions corresponding to the track on the optical recording medium, and so as to detect components of the light beam split into two in directions corresponding to the direction traversing the track on the optical recording medium; and
said ID signal detector obtains a second difference signal in the direction traversing the track based on output signals of the detector parts of the photodetector, and outputs the second difference signal as a reproduced optical signal.

17. The optical storage unit as claimed in claim 16, further comprising:

a Foucault unit splitting a returning light beam reflected from the optical recording medium into three in directions corresponding to the track on the optical recording medium, and irradiating the split beam on the photodetector,
said ID signal detector obtaining the first difference signal using a detection result of the photodetector excluding a central portion of the returning light beam.

18. The optical storage unit as claimed in claim 15, wherein said ID signal detector obtains a sum total signal in a direction corresponding to the track on the optical recording medium based on output signals of the detector parts of the photodetector, and outputting the sum total signal as the detected ID signal.

19. The optical storage unit as claimed in claim 16, wherein said ID signal detector obtains a sum total signal in a direction corresponding to the track on the optical recording medium based on output signals of the detector parts of the photodetector, and outputting the sum total signal as the detected ID signal.

20. The optical storage unit as claimed in claim 18, further comprising:

an output section selectively outputting one of the difference signal and the sum total signal as the detected ID signal.

21. The optical storage unit as claimed in claim 20, further comprising:

a controller automatically controlling a switching of the output section depending on a type or capacity of the optical recording medium.

22. The optical storage unit as claimed in claim 20, wherein:

the optical recording medium comprises a magneto-optical recording medium; and
said output section selectively outputs the difference signal as the detected ID signal when a depth of the embossed pits of the magneto-optical recording medium is approximately 80 nm or less.

23. The optical storage unit as claimed in claim 19, further comprising:

an output section selectively outputting one of the difference signal and the sum total signal as the detected ID signal.

24. The optical storage unit as claimed in claim 23, further comprising:

a controller automatically controlling a switching of the output section depending on a type or capacity of the optical recording medium.

25. The optical storage unit as claimed in claim 23, wherein:

the optical recording medium comprises a magneto-optical recording medium; and
said output section selectively outputs the first difference signal as the detected ID signal when a depth of embossed pits of the magneto-optical recording medium is approximately 80 nm or less.

# FIG.1

# FIG.2

# FIG.3

SECTER MARK (GROOVE)

ID SIGNAL (GROOVE)

SECTOR MARK (LAND)

ID SIGNAL (LAND)

GROOVE ID PART

LAND ID PART

DATA PART

EP 1 067 522 A2

FIG.4

# FIG.5A

405

ENLAGED VIEW

503

502

RADIAL DIRECTION

PERIPHERAL DEIRECTION

# FIG.5B

409

a       b

MO              =a-b

ID (SECTOR MARK) =a+b

# FIG.5C

r       s

412

p       q

FES = (p+s)-(q+r)

TES = (p+q)-(r+s)

# FIG.6

EP 1 067 522 A2

# FIG.7A

# FIG.7B

# FIG.8

801

802

FIG.9A

12μm

903

902

901

FIG.9B

905    906

901

902

FIG.9C

907

SECTOR MARK | ID PART | DATA PART

FIG.9D

908

# FIG.10A

1001

902 901

# FIG.10B

1001 902 901

## FIG.11A

1102    1103    1104    902    901    1101

SECTOR MARK
(GROOVE/LAND) | ID SIGNAL (GROOVE) | ID SIGNAL (LAND)

ID PART    DATA PART

## FIG.11B

1106    1101    1105

ZONE 1
L(N-2)
G(N-1)
L(N-1)
G(N)
L(N)

ZONE 2
G(1)
L(1)
G(2)
L(2)

## FIG.11C

1101

ZONE 1
L(N-2)
G(N-1)
L(N-1)
G(N)
L(N)
B1
B2

ZONE 2
G(1)
L(1)
G(2)
L(2)

# FIG.12

# FIG.13

# FIG.14

LAND
GROOVE
LAND
GROOVE
LAND

**1401**

RADIAL DIRECTION

PERIPHERAL DIRECTION
(TANGENTIAL)

509

a — b

MO = a−b

1303A

c — d

ID (SECTOR MARK) = c − d

1303B

e / f

ID (SECTOR MARK) = e OR f

1303C

i — j
g — h

ID (SECTOR MARK) = (i+g)−(h+j)
ID (SECTOR MARK) = (i+j) OR (g+h)

EP 1 067 522 A2

# FIG.15

## FIG.16A

621

622

1502

TIME

## FIG.16B

621

622

1502

TIME

# FIG.17A

1701

# FIG.17B

1702

EP 1 067 522 A2

# FIG.18

# FIG.19

# FIG.20

# FIG.21

2102          2101

# FIG.22

2202          2101

## FIG.23A

(1)

(2)

(3)

S1A

S2A

S3A

→ TIME

## FIG.23B

3001

(1)

(2)    S2B

(3)

S1B

S3B

3002    → TIME

# FIG.24

# FIG.25

EP 1 067 522 A2

# FIG.26

# FIG.27A    FIG.27B    FIG.27C

# FIG.28

# FIG.29

# FIG.30A   FIG.30B   FIG.30C

**FIG.31A**

1

1A — BS

RADIAL DIRECTION

PERIPHERAL DIRECTION

**FIG.31B**

DC 0V

**FIG.31C**

DC 0V

# FIG.32

# FIG.33

# FIG.34

# FIG.35A　　FIG.35B　　FIG.35C

# FIG.36

# FIG.37A

# FIG.37B

# FIG.38

# FIG.39

# FIG.40

# FIG.41

# FIG.42

# FIG.43

6
24b
10
24a 24 24c
20 20b
20a 20c
Y
26

# FIG.44

26a 26b
26i 26j
26e 26n
26m 26f
26k 26l
26c 26d

# FIG.45

# FIG.46